# EUROPEAN PATENT APPLICATION

(11) **EP 4 797 718 A1**
(43) Date of publication of application: **26.08.2026**
(21) Application number: 24879426.5
(22) Date of filing: 23.08.2024
(51) Int. Cl.: H04N 25/69, H04N 25/76

(54) **SOLID-STATE IMAGING ELEMENT, IMAGING SYSTEM, AND METHOD FOR CONTROLLING SOLID-STATE IMAGING ELEMENT**

(30) Priority: 19.10.2023 JP 2023179934
(71) Applicant: Sony Semiconductor Solutions Corporation, Atsugi-shi, Kanagawa 243-0014 (JP)
(72) Inventor: NOJIRI, Naoya, Atsugi-shi, Kanagawa 243-0014 (JP)
(74) Representative: Müller Hoffmann & Partner
(86) International application number: PCT/JP2024/030039
(87) International publication number: WO 2025/083998

(57) **Abstract**

In a solid-state imaging element that self-detects the presence or absence of a failure, reliability is improved.

The solid-state imaging element includes a predetermined number of column circuits, a redundant column circuit, a failure detecting section, and a control section. The predetermined number of column circuits read pixel signals. The failure detecting section detects presence or absence of a failure in each of the column circuits. The control section executes, in a case where a failure is detected in any of the column circuits, redundancy switchover for switching points where at least a part of the predetermined number of column circuits and the redundant column circuit are respectively connected.

## Description

### TECHNICAL FIELD

The present technology relates to a solid-state imaging element. More specifically, the present technology relates to a solid-state imaging element that detects the presence or the absence of a failure, an imaging system, and a method for controlling a solid-state imaging element.

### BACKGROUND ART

Conventionally, some solid-state imaging elements used in cameras for industrial applications, in-vehicle cameras, or the like are equipped with built-in self test (BIST) functions for self-detecting a failure. For example, there has been a disclosure of a solid-state imaging element that detects a failure in a row driver, a breakage of a vertical signal line, or the like, and that notifies a host device such as an electronic control unit (ECU) of the detection (see, for example, Patent Document 1).

### CITATION LIST

### PATENT DOCUMENT

Patent Document 1: WO 2017/209221 A

### SUMMARY OF THE INVENTION

### PROBLEMS TO BE SOLVED BY THE INVENTION

In the above-described conventional technology, the point of a failure is identified using the BIST function. However, in the above-described conventional technology, a failure in a circuit may cause a defect such as a streaky defect in the image data (that is, a frame). In a case where a defect appears, it is possible for the solid-state imaging element to perform pixel interpolation, for example, but the pixel interpolation may deteriorate image quality, and deteriorate the reliability of the system.

The present technology has been made in view of such circumstances, and it is therefore an object of the present technology to improve reliability of a solid-state imaging element that self-detects the presence of a failure.

### SOLUTIONS TO PROBLEMS

The present technology has been made to solve the problems described above, and a first aspect thereof is a solid-state imaging element and a control method for controlling a solid-state imaging element, the solid-state imaging element including: a predetermined number of column circuits that read pixel signals; a redundant column circuit; a failure detecting section that detects presence or absence of a failure in each of the column circuits; and a control section that executes, in a case where a failure is detected in any of the column circuits, redundancy switchover for switching points where at least a part of the predetermined number of column circuits and the redundant column circuit are respectively connected. This brings about an effect of improving reliability of the system.

Furthermore, in the first aspect, the solid-state imaging element may further include a pixel array section including N floating diffusion layers aligned along a predetermined direction, in which the predetermined number of column circuits is N; prior to any detection of a failure, first to Nth floating diffusion layers are connected to first to Nth column circuits; and, in a case where an nth column circuit fails, with n being an integer between 1 and N, the control section may switch, in the redundancy switchover, points where nth to Nth floating diffusion layers are connected to (n+1)th to Nth column circuits and the redundant column circuit. This brings about an effect of improving reliability of the system.

Furthermore, in the first aspect, in a case where a failure is detected in any of the column circuits, the control section may execute one of the redundancy switchover or a fallback operation for reducing a read speed for the predetermined number of column circuits. This brings about an effect that the reliability and the throughput are maintained.

Furthermore, in the first aspect, each of the predetermined number of column circuits includes: first and second analog-to-digital converters; first and second vertical signal lines; a first selector that connects any one of the first and second vertical signal lines to any one of the first and second analog-to-digital converters; and a second selector that connects any one of the first and second vertical signal lines to one of the first and second analog-to-digital converters, in which, in the fallback operation, in a case where one of the first and second analog-to-digital converters or one of the first and second vertical signal lines fails, the control section may control one of the first and second selectors to cause the first and second vertical signal lines to connect alternately to another one of the first and second analog-to-digital converters, in synchronization with a horizontal synchronization signal. This brings about an effect that the reliability or the throughput is maintained.

Furthermore, in the first aspect, the solid-state imaging element may further include: a retaining section that retains setting information indicating priority of each of the redundancy switchover and the fallback operation; and a fallback/redundancy determination section that determines, in a case where a failure is detected in any of the column circuits, which one of the redundancy switchover and the fallback operation is to be executed by the control section, on the basis of the setting information. Therefore, it is possible to determine whether to perform the redundancy switchover or the fallback operation on the solid-state imaging element side.

Furthermore, in the first aspect, in a case where the fallback operation is to be executed, the fallback/redundancy determination section may request change of a cycle of a vertical synchronization signal from a host device. This brings about an effect that the reliability is maintained.

Furthermore, in the first aspect, the solid-state imaging element may further include a pixel array section in which a plurality of pixels is arranged in a two-dimensional lattice-like pattern; and a pixel interpolating section that executes, in a case where one or more of the plurality of pixels fail, an interpolation of a pixel signal of the failed pixel on the basis of pixel signals around the failed pixel, and the failure detecting section may further detect presence or absence of a failure of each of the plurality of pixels. This brings about an effect that the throughput is maintained.

Furthermore, in the first aspect, the solid-state imaging element may further include a statistical processing section that acquires a variable range of a region of interest in the pixel array section, through statistical processing. This brings about an effect that the processing on the host side is reduced.

Furthermore, in the first aspect, a failure counting section that counts the number of failures detected from the variable range within a predetermined period and outputs a count value may be further included, and the redundancy/fallback determination section may execute the redundancy switchover or the fallback operation in a case where the count value is greater than a predetermined threshold value. This brings about an effect that unnecessary redundancy switchover and failbacks are eliminated.

Furthermore, a second aspect is a solid-state imaging element including: a predetermined number of column circuits that read pixel signals; a failure detecting section that detects presence or absence of a failure in each of the column circuits; and a control section that executes, in a case where a failure is detected in any of the column circuits, a fallback operation for reducing a read speed for the predetermined number of column circuits. This brings about an effect that the reliability or the throughput is maintained.

Furthermore, a third aspect of the present technology is an imaging system including: a host device; a predetermined number of column circuits that read pixel signals; a redundant column circuit; a failure detecting section that detects presence or absence of a failure in each of the column circuits, and that notifies the host device of a detection result; and a control section that executes, in a case where a failure is detected in any of the column circuits, redundancy switchover for switching points where at least a part of the predetermined number of column circuits and the redundant column circuit are connected. This brings about an effect of improving reliability of the system.

### BRIEF DESCRIPTION OF DRAWINGS

Fig. 1 is a block diagram illustrating a configuration example of an imaging system according to a first embodiment of the present technology.
Fig. 2 is a block diagram illustrating a configuration example of an image processing section according to the first embodiment of the present technology.
Fig. 3 is a circuit diagram illustrating a configuration example of a shared block according to the first embodiment of the present technology.
Fig. 4 is a circuit diagram illustrating a configuration example of a pixel according to the first embodiment of the present technology.
Fig. 5 is a circuit diagram illustrating a configuration example of a north-side column signal processing section according to the first embodiment of the present technology.
Fig. 6 is a circuit diagram illustrating a configuration example of a south-side column signal processing section according to the first embodiment of the present technology.
Fig. 7 is a diagram illustrating an example of an initial state of a circuit in the first embodiment of the present technology.
Fig. 8 is a diagram illustrating an example of a state of the circuit during redundancy switchover according to the first embodiment of the present technology.
Fig. 9 is a diagram for explaining the redundancy switchover according to the first embodiment of the present technology.
Fig. 10 is a diagram illustrating an example of a state of the circuit during a fallback operation according to the first embodiment of the present technology.
Fig. 11 is a timing chart illustrating an example of a read operation in a horizontal scan period according to the first embodiment of the present technology.
Fig. 12 is a timing chart illustrating an example of a read operation during a V-blank period according to the first embodiment of the present technology.
Fig. 13 is an example of a sequence chart during a speed-based fallback operation according to the first embodiment of the present technology.
Fig. 14 is an example of a timing chart before and after the speed-based fallback operation according to the first embodiment of the present technology.
Fig. 15 is an example of a sequence chart during an angle-of-view-based fallback operation according to the first embodiment of the present technology.
Fig. 16 is an example of a timing chart before and after the angle-of-view-based fallback operation according to the first embodiment of the present technology.
Fig. 17 is an example of a timing chart and frames before and after the angle-of-view-based fallback operation according to the first embodiment of the present technology.
Fig. 18 is a diagram illustrating an example of setting information in a register according to the first embodiment of the present technology.
Fig. 19 is an example of a sequence chart during a speed-based fallback operation in a comparative example.
Fig. 20 is a flowchart illustrating an example of an operation of an edge device according to the first embodiment of the present technology.
Fig. 21 is a flowchart illustrating an example of failure detection processing according to the first embodiment of the present technology.
Fig. 22 is a flowchart illustrating an example of recovery processing according to the first embodiment of the present technology.
Fig. 23 is a diagram illustrating an example of frames before and after redundancy switchover according to the first embodiment of the present technology.
Fig. 24 is a diagram illustrating an example of frames during the fallback operation according to the first embodiment of the present technology.
Fig. 25 is a diagram illustrating an example of frames during pixel interpolation according to the first embodiment of the present technology.
Fig. 26 is a diagram illustrating an example of evaluations for every mode according to the first embodiment of the present technology.
Fig. 27 illustrates an example of frames and a region of interest (ROI) according to the first embodiment of the present technology.
Fig. 28 is a diagram illustrating an example of a change in ROI coordinates according to the first embodiment of the present technology.
Fig. 29 is a diagram illustrating an example of ROI setting according to the first embodiment of the present technology.
Fig. 30 is a block diagram illustrating a configuration example of an image processing section according to a second embodiment of the present technology.
Fig. 31 is a flowchart illustrating an example of an operation of an edge device according to the second embodiment of the present technology.
Fig. 32 is a block diagram illustrating a configuration example of an imaging system according to a third embodiment of the present technology.
Fig. 33 is a block diagram illustrating a configuration example of an image processing section according to the third embodiment of the present technology.
Fig. 34 is a circuit diagram illustrating a configuration example of a column signal processing section according to the third embodiment of the present technology.
Fig. 35 is a diagram illustrating an example of a pixel array section according to the third embodiment of the present technology.
Fig. 36 is a block diagram illustrating a configuration example of an imaging system according to a fourth embodiment of the present technology.
Fig. 37 is a block diagram illustrating a configuration example of an image processing section according to the fourth embodiment of the present technology.
Fig. 38 is a circuit diagram illustrating a configuration example of a shared block according to the fourth embodiment of the present technology.
Fig. 39 is a diagram illustrating an example of a pixel array section according to the fourth embodiment of the present technology.
Fig. 40 is a block diagram illustrating an example of a schematic configuration of a vehicle control system.
Fig. 41 is an explanatory diagram illustrating an example of installation positions of an outside-vehicle information detecting section and an imaging section.

### MODE FOR CARRYING OUT THE INVENTION

Modes for carrying out the present technology (hereinafter referred to as embodiments) will be described below. The description will be given in the following order.
1. First Embodiment (Example in Which Redundancy Switchover or Fallback Operation is Performed at Time of Failure)
2. Second Embodiment (Example in Which Redundancy Switchover or Fallback Operation is Performed at Time of Failure, and Region of Interest Is Set on Edge Side)
3. Third Embodiment (Example in Which Redundancy Switchover is Performed at Time of Failure)
4. Fourth Embodiment (Example in Which Fallback Operation is Performed at Time of Failure)
5. Application Example to Mobile Body

### <1. First Embodiment>

### [Configuration example of imaging device]

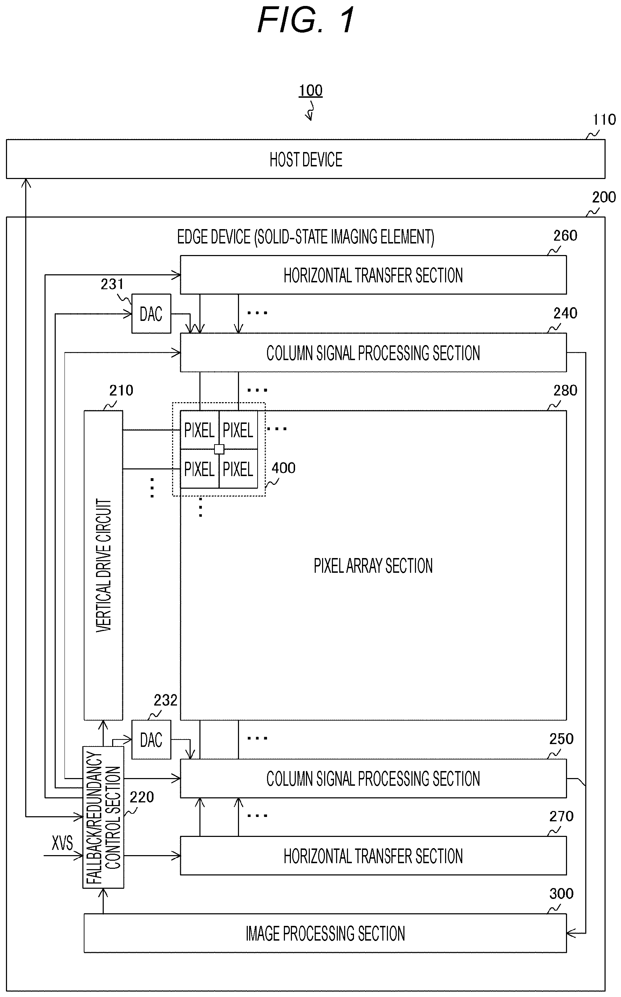

Fig. 1 is a block diagram illustrating a configuration example of an imaging system 100 according to a first embodiment of the present technology. The imaging system 100 includes a host device 110 and an edge device 200.

The host device 110 is a device that controls the edge device 200. As the host device 110, a central processing unit (CPU), a field-programmable gate array (FPGA), a digital signal processing (DSP), or the like is used. The host device 110 supplies a vertical synchronization signal XVS indicating the timing for capturing image data (that is, a frame) to the edge device 200.

The edge device 200 captures a frame in accordance with the control of the host device 110. As the edge device 200, a solid-state imaging element is used. Note that the edge device 200 is an example of a solid-state imaging element described in the claims.

The edge device 200 includes a vertical drive circuit 210, a fallback/redundancy control section 220, digital-to-analog converters (DACs) 231 and 232, column signal processing sections 240 and 250, and horizontal transfer sections 260 and 270. Furthermore, the edge device 200 further includes a pixel array section 280 and an image processing section 300.

A plurality of pixels is arranged in a two-dimensional lattice-like shape in the pixel array section 280. Furthermore, in the pixel array section 280, a plurality of adjacent pixels (four pixels of two rows × two columns, for example) shares a floating diffusion layer, and a block including the arrangement of these pixels is defined as a shared block 400.

The vertical drive circuit 210 drives the pixels sequentially in accordance with the control of the fallback/redundancy control section 220, and outputs analog pixel signals.

The fallback/redundancy control section 220 controls the vertical drive circuit 210, the DACs 231 and 232, the column signal processing sections 240 and 250, and the horizontal transfer sections 260 and 270, in synchronization with the vertical synchronization signal XVS, and executes redundancy switchover and a fallback operation. Details of the redundancy switchover and the fallback operation will be described later.

The DAC 231 generates a sawtooth-shaped ramp signal by digital-to-analog (DA) conversion, and supplies the signal to the column signal processing section 240. The DAC 232 generates a sawtooth-shaped ramp signal by DA conversion, and supplies the signal to the column signal processing section 250.

The column signal processing sections 240 and 250 read pixel signals from the pixel array section 280. For example, the column signal processing section 240 reads pixel signals from the shared blocks 400 in the odd-numbered rows, and the column signal processing section 250 reads the pixel signals from the shared blocks 400 in the even-numbered rows. In each of the column signal processing sections 240 and 250, a plurality of analog-to-digital converters (ADCs) is disposed. The column signal processing sections 240 and 250 supply the read signals to the image processing section 300, in accordance with the control of the horizontal transfer sections 260 and 270.

The horizontal transfer section 260 controls to cause the column signal processing section 240 to sequentially output the pixel signals. The horizontal transfer section 270 controls to cause the column signal processing section 250 to sequentially output the pixel signals.

Hereinafter, for convenience, the DAC 231, the column signal processing section 240, and the horizontal transfer section 260 will be referred to as "north-side" circuits, and the DAC 232, the column signal processing section 250, and the horizontal transfer section 270 will be referred to as "south-side" circuits.

The image processing section 300 performs predetermined processing on the image data (frame) that is a sequence of the pixel signals from the column signal processing sections 240 and 250. The image processing section 300 supplies the processed frame to the host device 110.

### [Configuration example of image processing section]

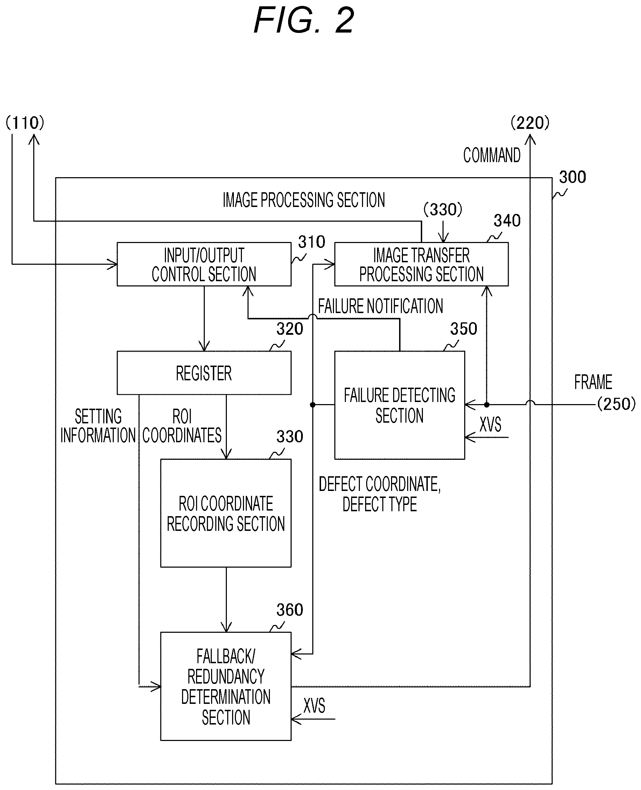

Fig. 2 is a block diagram illustrating a configuration example of the image processing section 300 according to the first embodiment of the present technology. The image processing section 300 includes an input/output control section 310, a register 320, an ROI coordinate recording section 330, an image transfer processing section 340, a failure detecting section 350, and a fallback/redundancy determination section 360.

The input/output control section 310 exchanges data other than a frame with the host device 110. As a communication interface with the host device 110, for example, a serial peripheral interface (SPI) or an inter-integrated circuit (I2C) is used. As an interface on the side of the host device 110, a general-purpose input/output (GPIO) or the like is used.

To the input/output control section 310, setting information and ROI coordinates from the host device 110 are input, for example. The setting information is information indicating the priorities of various functions such as those for a fallback operation and redundancy switchover. The ROI coordinates are coordinates of a predetermined position (e.g., of each of the upper left and lower right vertices) of the ROI. The input/output control section 310 causes the register 320 to retain these pieces of information.

The register 320 retains data such as setting information and ROI coordinates. Note that the register 320 is an example of a retaining section described in the claims.

The ROI coordinate recording section 330 reads the ROI coordinates from the register 320, and records the ROI coordinates. As the ROI coordinate recording section 330, for example, a non-volatile memory is used. ROI coordinates recorded in the ROI coordinate recording section 330 are read by the fallback/redundancy determination section 360 and the image transfer processing section 340.

The image transfer processing section 340 performs various types of processing on the frames from the column signal processing sections 240 and 250, and transfers the processed frames to the host device 110. For example, processing such as cutting out the ROI or demosaicing processing are performed. Furthermore, in a case where a failure in the pixel is detected by the failure detecting section 350, the image transfer processing section 340 performs pixel interpolation for interpolating the pixel signal of the failed pixel, on the basis of the pixel signals around the failed pixel. Note that the image transfer processing section 340 is an example of a pixel interpolating section described in the claims.

The failure detecting section 350 analyzes a frame, and detects the presence or absence of a failure in the circuits in the edge device 200. The failure detecting section 350 analyzes a frame, and, in a case where there is a defect, determines that there is a failure in the circuits in the edge device 200, and notifies the host device 110 of the failure via the input/output control section 310.

Furthermore, when there is a defect in the frame, the failure detecting section 350 acquires the coordinates of the defect and the type of the defect. The type of a defect includes a point defect, a streaky defect, or a dotted-line-like defect. These defects can be classified into defects caused by a failure in a pixel, and defects caused by a failure in a circuit other than the pixels (the ADC, the vertical signal lines, or the like).

The failure detecting section 350 determines the point of failure, and, in a case where the failure is in a pixel, supplies the coordinates of the defect to the image transfer processing section 340. By contrast, in a case where the failure is in the part other than the pixels, the failure detecting section 350 supplies the coordinates of the defect and the type of the defect to the fallback/redundancy determination section 360. A method for determining the point of failure will be described later.

The fallback/redundancy determination section 360 determines which one of the redundancy switchover and the fallback operation is to be executed, on the basis of the coordinates of the defect, the type of the defect, and the setting information.

Here, it is assumed that the host device 110 can change the coordinates of an ROI within a certain variable range, on the basis of the frame from the edge device 200. The fallback/redundancy determination section 360 refers to the ROI coordinates in the ROI coordinate recording section 330, and determines whether or not the coordinates of the defect from the failure detecting section 350 are coordinates within the variable range of the ROI. Then, in a case where the coordinates of the defect are within the variable range, the fallback/redundancy determination section 360 determines that recovery is necessary, and determines which one of the redundancy switchover and the fallback operation is to be executed on the basis of the setting information. On the basis of this determination result, the fallback/redundancy determination section 360 causes the fallback/redundancy control section 220 to execute the redundancy switchover or the fallback operation, by supplying various commands.

### [Configuration example of shared block]

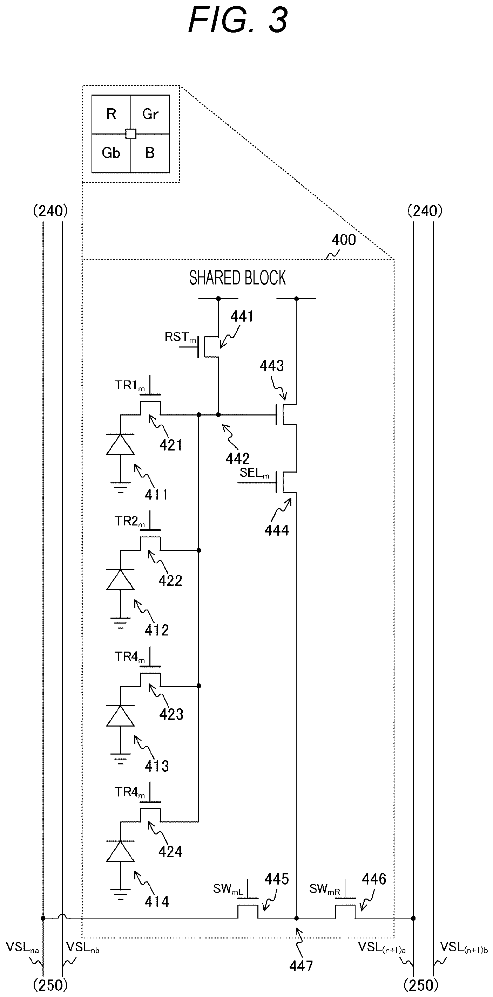

Fig. 3 is a circuit diagram illustrating a configuration example of the shared block 400 according to the first embodiment of the present technology. The shared block 400 includes photoelectric conversion elements 411 to 414, transfer transistors 421 to 424, a reset transistor 441, a floating diffusion layer 442, an amplification transistor 443, a selection transistor 444. Furthermore, the shared block 400 further includes connection transistors 445 and 446. For example, n-channel metal oxide semiconductor (nMOS) transistors are used as the transistors in the shared block 400.

Furthermore, the number of rows of the shared blocks 400 (that is, the floating diffusion layers) in the pixel array section 280 is denoted by M (where M is an integer), and the number of columns of the shared blocks 400 is denoted by N (where N is an integer). m denotes an integer in a range between 1 and M, and n denotes an integer in a range between 1 and N+1. In the pixel array section 280, for every column of the shared block 400, two vertical signal lines are wired, and two redundant vertical signal lines are further wired. Therefore, the total number of vertical signal lines is 2×(N+1). The two vertical signal lines corresponding to the nth column will be denoted as VSLₙₐ and VSL_{nb}. The shared block 400 in the drawing is positioned at the mth row and nth column.

The photoelectric conversion elements 411 to 414 generate charge by photoelectric conversion. The transfer transistor 421 makes a transfer from the photoelectric conversion element 411 to the floating diffusion layer 442, in accordance with a transfer signal TR1ₘ from the vertical drive circuit 210. The transfer transistor 422 makes a transfer from the photoelectric conversion element 412 to the floating diffusion layer 442, in accordance with a transfer signal TR2ₘ from the vertical drive circuit 210.

The transfer transistor 423 makes a transfer from the photoelectric conversion element 413 to the floating diffusion layer 442, in accordance with a transfer signal TR3ₘ from the vertical drive circuit 210. The transfer transistor 424 makes a transfer from the photoelectric conversion element 414 to the floating diffusion layer 442, in accordance with a transfer signal TR4ₘ from the vertical drive circuit 210. The level of the pixel signal at the time of transferring the charge will be referred to as a "signal level".

The reset transistor 441 initializes the floating diffusion layer 442 in accordance with a reset signal RSTₘ received from the vertical drive circuit 210. The level of the pixel signal when the floating diffusion layer 442 is initialized is set as a "reset level".

The amplification transistor 443 amplifies the potential of the floating diffusion layer 442. The selection transistor 444 outputs a signal of the amplified potential as a pixel signal to a connection node 447, in accordance with a selection signal SELₘ from the vertical drive circuit 210.

The connection transistor 445 opens and closes the path between the connection node 447 and the vertical signal line VSLₙₐ, in accordance with a switching signal SW_{mL} from the vertical drive circuit 210. The connection transistor 446 opens and closes the path between the connection node 447 and the vertical signal line VSL₍ₙ₊₁₎ₐ, in accordance with a switching signal SW_{mR} from the vertical drive circuit 210.

It is assumed that the shared block 400 illustrated in the drawing is disposed in an odd-numbered row. In the shared blocks 400 in the even-numbered rows, the points where the connection transistors 445 and 446 are connected are the vertical signal lines VSL_{nb} and VSL_{(n+1)b}.

The shared block 400 illustrated in the drawing functions as pixels of two rows ×two columns sharing the floating diffusion layer. For example, in the shared block 400, a red (R) pixel, green (G) pixels, and a blue (B) pixel are arranged in the Bayer pattern.

Note that the number of pixels sharing the floating diffusion layer 442 is not limited to four, and may be eight or the like.

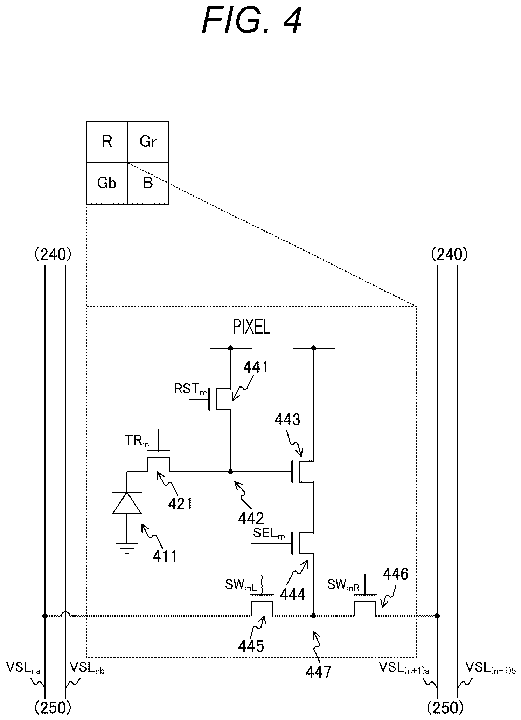

Furthermore, as illustrated in Fig. 4, it is also possible for a plurality of adjacent pixels not to share the floating diffusion layer 442. In such a case, the photoelectric conversion element 411, the transfer transistor 421, the reset transistor 441, the floating diffusion layer 442, the amplification transistor 443, the selection transistor 444, and the connection transistors 445 and 446 are arranged for every pixel.

### [Configuration example of column signal processing section]

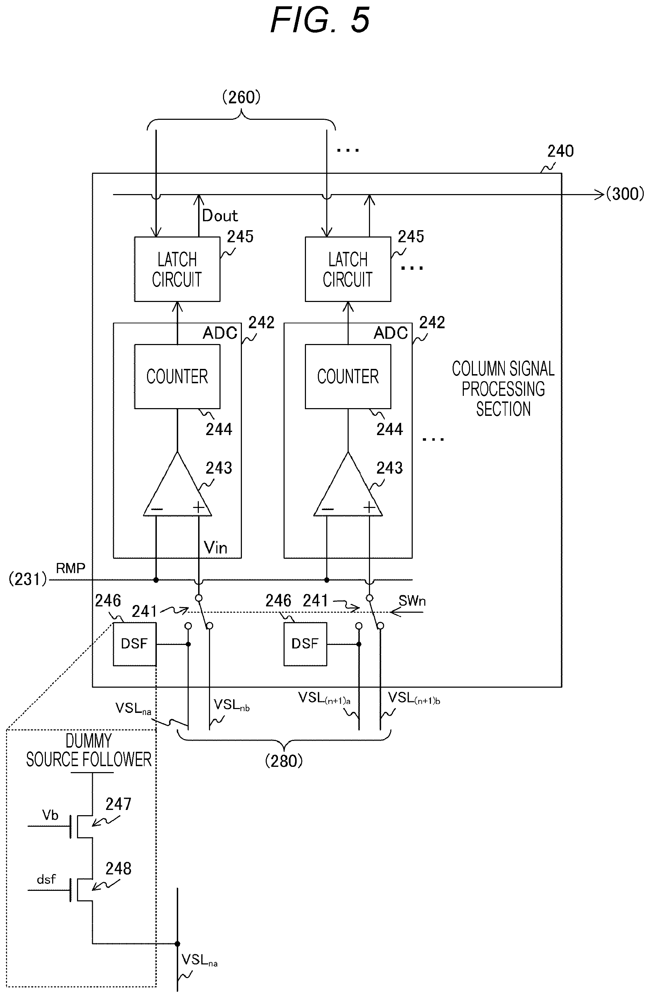

Fig. 5 is a diagram illustrating a configuration example of the north-side column signal processing section 240 according to the first embodiment of the present technology. This column signal processing section 240 includes N+1 latch circuits 245, N+1 ADCs 242, N+1 selectors 241, and N+1 dummy source followers 246. The (N+1)th circuit of each serves as a redundant circuit.

The dummy source followers 246 generate dummy pixel signals. The dummy source followers 246 each include dummy transistors 247 and 248. As these transistors, for example, nMOS transistors are used.

The dummy transistor 247 is inserted between a power source voltage and the dummy transistor 248, and a bias voltage Vb is applied to the gate of the dummy transistor 247. The dummy transistor 248 is inserted between the dummy transistor 247 and the vertical signal line VSLₙₐ, and a control signal dsf from the fallback/redundancy control section is input to the gate of the dummy transistor 248. The level of the dummy pixel signals is controlled to the reset level or the signal level, using the bias voltage Vb. Furthermore, the control signal dsf controls whether or not to output the dummy pixel signal.

The ADC 242 performs analog-to-digital (AD) conversion of a pixel signal. The ADC 242 is, for example, a single-slope ADC including a comparator 243 and a counter 244.

The selector 241 in the nth column connects one of the vertical signal lines VSLₙₐ and VSL_{nb} to the non-inverting input terminal (+) of the comparator 243 in the ADC 242 in the nth column, in accordance with a switching signal SWn from the fallback/redundancy control section.

A ramp signal RMP from the DAC 231 is input to the inverting input terminal (-) of the comparator 243. The comparator 243 compares the ramp signal RMP with an analog signal Vin from the selector 241, and supplies the comparison result to the counter 244.

The counter 244 increments a count value over the period until the comparison result is inverted. The counter 244 supplies a digital signal Dout indicating the count value to the latch circuit 245.

The latch circuit 245 retains the digital signal Dout, and outputs the digital signal Dout to the image processing section 300, in accordance with the control of the horizontal transfer section 260.

The counter 244 performs down-counting at the time of sampling the reset level, and performs up-counting at the time of sampling the signal level. This implements correlated double sampling (CDS) processing for obtaining the difference between the reset level and the signal level.

Note that another possible configuration is to cause the ADC 242 to perform only the AD conversion by up-counting, and to cause a subsequent circuit to perform the CDS processing. Furthermore, a single-slope ADC is used as the ADC 242, but without limitation to this configuration. For example, any ADC other than a single-slope ADC, e.g., a successive-approximation register analog-to-digital converter (SARADC) may also be used. The same applies to the south-side ADC.

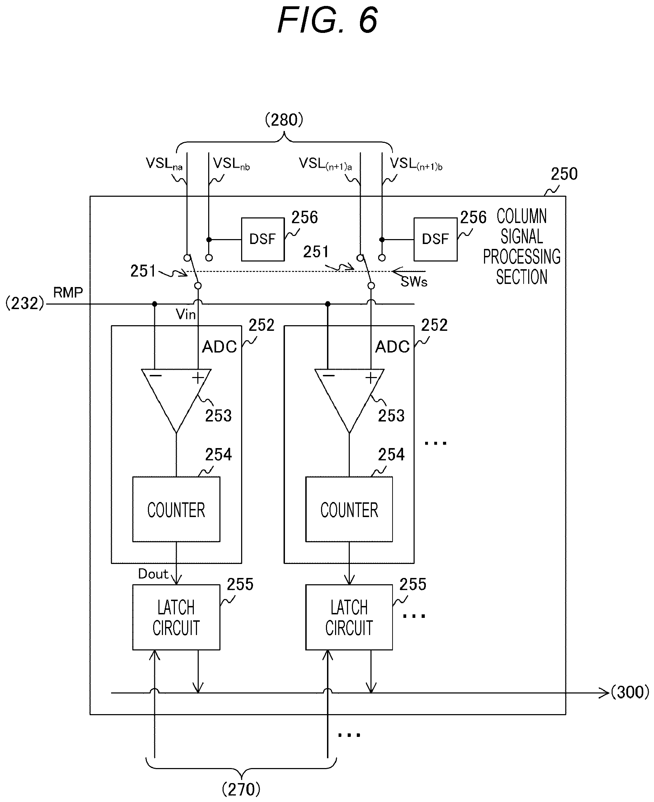

Fig. 6 is a diagram illustrating a configuration example of the south-side column signal processing section 250 according to the first embodiment of the present technology. This column signal processing section 250 includes N+1 latch circuits 255, N+1 ADCs 252, N+1 selectors 251, and N+1 dummy source followers 256. The (N+1)th circuit of each serves as a redundant circuit.

The circuit configuration of the south-side dummy source follower 256 is similar to that on the north side. The dummy source follower 256 in the nth column is, however, connected to the vertical signal line VSL_{nb}.

The ADC 252 is, for example, a single-slope ADC including a comparator 253 and a counter 254.

The selector 251 in the nth column connects one of the vertical signal lines VSLₙₐ and VSL_{nb} to the non-inverting input terminal (+) of the comparator 253 in the ADC 252 in the nth column, in accordance with the switching signal SWs from the fallback/redundancy control section.

The comparator 253, the counter 254, and the latch circuit 255 on the south side have circuit configurations similar to those on the north side. The latch circuit 255, however, outputs a digital signal in accordance with the control of the horizontal transfer section 270.

### [Operation example of edge device]

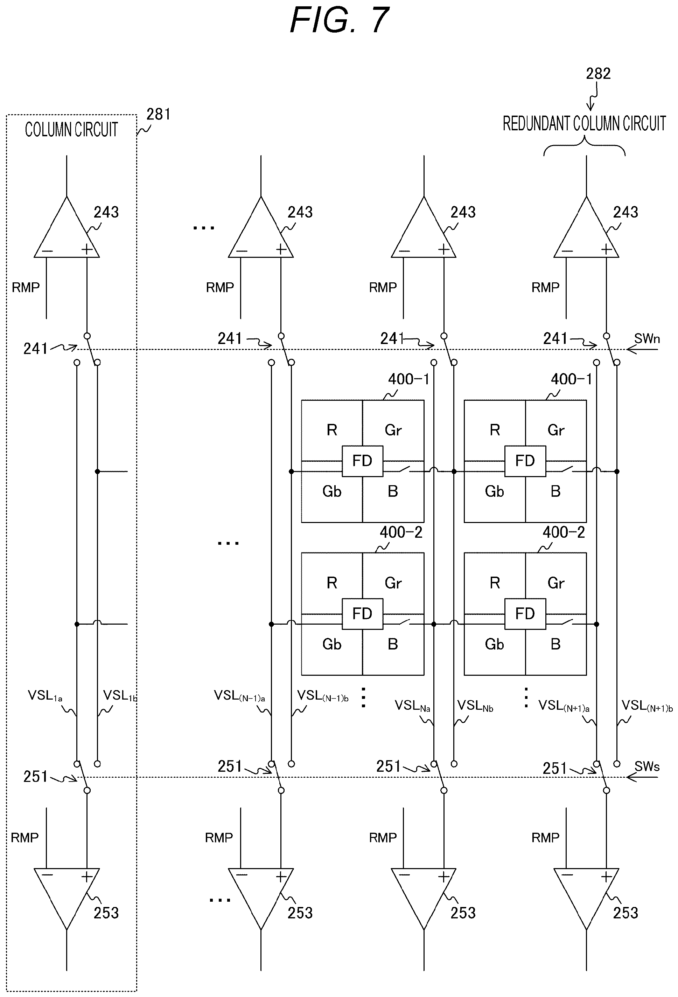

Next, the redundancy switchover will be described with reference to Figs. 7 to 9.

Fig. 7 is a diagram illustrating an example of an initial state of the circuit in the first embodiment of the present technology. In the initial state, the north-side selector 241 in the nth column connects the vertical signal line VSL_{nb} to the comparator 243 in the north-side ADC. The south-side selector 251 in the nth column connects the vertical signal line VSLₙₐ to the comparator 253 in the south-side ADC.

Furthermore, hereinafter, the circuit including the north-side and south-side ADCs and the vertical signal lines VSLₙₐ and VSL_{nb} corresponding to the nth column will be referred to as a column circuit 281. The circuit including the north-side and the south-side ADCs and the vertical signal lines VSL_{(N+1)a} and VSL_{(N+1)b} corresponding to the (N+1)th column will be referred to as a redundant column circuit 282. In addition to the N column circuits 281, one redundant column circuit 282 is disposed. The redundant configuration in which one redundant circuit is provided for N circuits, as described above, is referred to as an N+1 redundant configuration.

Furthermore, FD in the drawing denotes the floating diffusion layer. In the initial state, among the shared blocks 400-1 in the odd-numbered rows, the floating diffusion layers (FDs) in those in the nth column are connected to the vertical signal line VSL_{nb}. In the initial state, among the shared blocks 400-2 in the even-numbered rows, the floating diffusion layers (FD) of those in the nth column are connected to the vertical signal line VSLₙₐ.

With the connection configuration illustrated in the drawing, the north-side ADC reads the pixel signals from the odd-numbered rows, in synchronization with the horizontal synchronization signal, and the south-side ADC reads the pixel signals from the even-numbered rows, in synchronization with the horizontal synchronization signal.

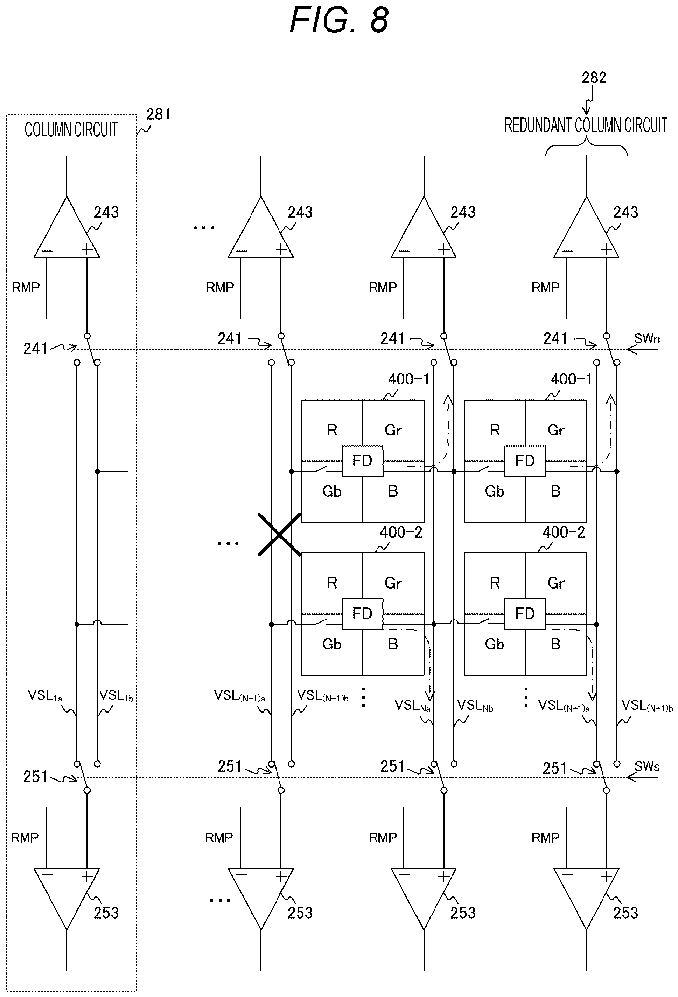

Fig. 8 is a diagram illustrating an example of a state of the circuit during redundancy switchover according to the first embodiment of the present technology. It is now assumed that a failure has occurred in a column circuit 281. Here, examples of the failure of the column circuit 281 include a breakage or a failure of at least one of the vertical signal line VSLₙₐ, the vertical signal line VSL_{nb}, the north-side ADC, and the south-side ADC. Among these causes of the failure, in a case where there is a breakage in only one of the vertical signal lines VSLₙₐ and VSL_{nb}, or in a case where there is a failure in only one of the north side and south-side ADCs, the failure detecting section 350 detects a dotted-line-like defect. In this case, it is preferable to perform the fallback operation. In a case where the fallback operation has a high priority in the setting information, the fallback/redundancy determination section 360 can cause the fallback/redundancy control section 220 to execute the fallback operation.

Furthermore, in a case where there are breakages of both of the vertical signal lines VSLₙₐ and VSL_{nb}, or in a case where there are failures in both of the north-side and the south-side ADCs, the failure detecting section 350 detects a linear defect. In this case, it is preferable to perform the redundancy switchover. In a case where the priority of the redundancy switchover is high in the setting information, the fallback/redundancy determination section 360 can cause the fallback/redundancy control section 220 to execute the redundancy switchover, in accordance with the setting information.

For example, it is assumed herein that there are breakages of both of the vertical signal lines VSL_{(N-1)a} and VSL_{(N-1)b} in the column circuit 281 of the (N-1)th column. In this case, the failure detecting section 350 detects a linear defect, and the fallback/redundancy control section 220 performs the redundancy switchover in a case where the redundancy switchover has a high priority. In this redundancy switchover, the fallback/redundancy control section 220 switches connections of the floating diffusion layers (FD) in the (N-1)th column to the vertical signal lines VSL_{Na} and VSL_{Nb}, and switches the connections of the FDs in the Nth column to the vertical signal lines VSL_{(N+1)a} and VSL_{(N+1)b}.

With this control, the pixel signals from the (N-1)th column are transmitted to the south and the north ADCs via the vertical signal lines VSL_{Na} and VSL_{Nb}, instead of the broken vertical signal lines VSL_{(N-1)a} and VSL_{(N-1)b}. In the drawing, the alternate long and short dash lines indicate the paths along which the pixel signals are transmitted. The pixels in the Nth column cannot use the vertical signal lines VSL_{Na} and VSL_{Nb}, but the pixel signals therefrom are transmitted to the south and the north ADCs via the redundant vertical signal lines VSL_{(N+1)a} and VSL_{(N+1)b}.

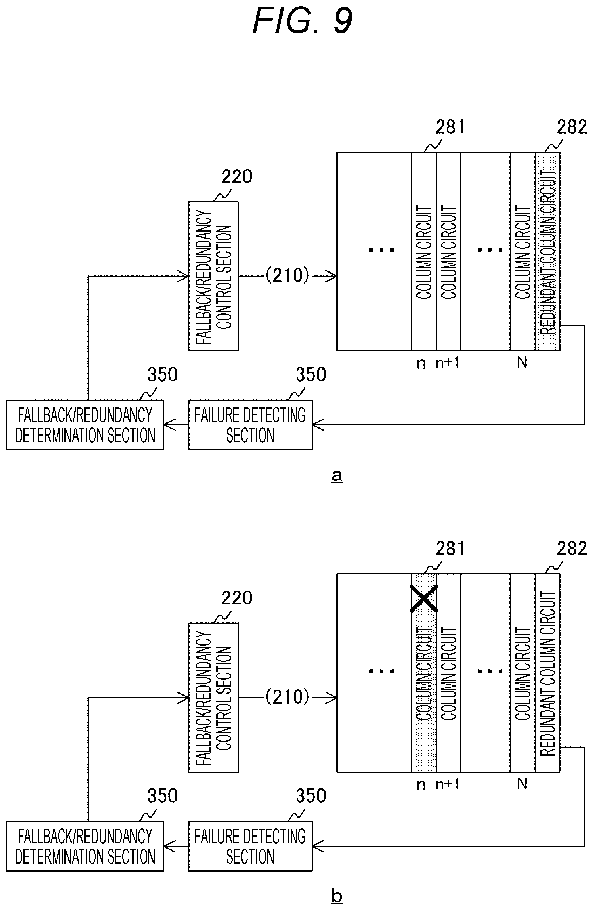

Fig. 9 is a diagram for explaining the redundancy switchover according to the first embodiment of the present technology. In the edge device 200, denoting the number of columns of the shared blocks 400 by N, N column circuits 281 and one redundant column circuit 282 are arranged.

As illustrated in a of the drawing, in the initial state, the floating diffusion layers (not illustrated) in the first to Nth columns are connected to the first to Nth column circuits 281. The redundant column circuit 282 is isolated from the floating diffusion layers. Grey portions in a and b in the drawing indicate circuits isolated from the floating diffusion layers.

These column circuits 281 read pixel signals corresponding to the N columns. The failure detecting section 350 detects the presence or absence of a failure in each of the column circuits 281. In a case where a failure is detected in any of the column circuits 281, the fallback/redundancy determination section 360 causes the fallback/redundancy control section 220 to execute one of the redundancy switchover and the fallback operation. Here, it is assumed that the redundancy switchover has been executed.

As illustrated in b of the drawing, in the redundancy switchover, the fallback/redundancy control section 220 switches the connections of at least a part of the N column circuits 281 and the redundant column circuit 282. In a case where a failure has occurred in the nth column circuit, the fallback/redundancy control section 220 switches the connections of the floating diffusion layers of the n to N columns to those of the (n+1)th to N column circuits 281 and the redundant column circuit 282. As a result of this switching, even if there is a failure in any of the column circuits 281, the edge device 200 can read the pixel signals corresponding to the N columns normally, and can maintain the image quality of the frame. Therefore, the reliability of the imaging system 100 can be improved.

Note that, although the number of redundant column circuits 282 is one, the present invention is not limited to this configuration, and two or more redundant column circuits 282 may be arranged to achieve a redundancy configuration of N+2 or more. Therefore, even if a failure occurs in two or more columns, the image quality can be maintained.

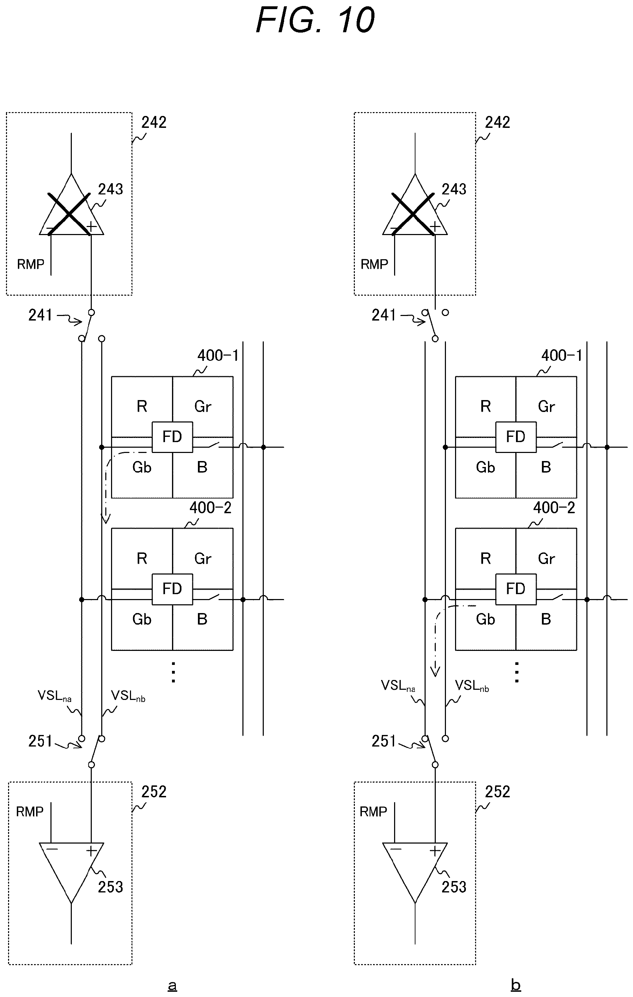

Fig. 10 is a diagram illustrating an example of a state of the circuit during the fallback operation according to the first embodiment of the present technology. For example, it is assumed that the north-side ADC 242 corresponding to the nth column has failed. In this case, the failure detecting section 350 detects a dotted-line-like defect in the nth column, and the fallback/redundancy control section 220 performs the fallback operation for reducing the speed of reads by the column circuits 281.

In the fallback operation, the fallback/redundancy control section 220 controls the selectors 251 in all of the south-side columns so as to connect the vertical signal lines VSLₙₐ and VSL_{nb} alternately to the south-side ADC 252, in synchronization with the horizontal synchronization signal. By contrast, the north-side ADCs 242 in all of the columns, including those without any failures, are disabled. Note that, in a case where any of the south-side ADCs 252 fails, the vertical signal lines VSLₙₐ and VSL_{nb} are connected alternately to the north-side ADC 242.

For example, as illustrated in the drawing, the fallback/redundancy control section 220 controls the south-side selector 251 to connect the vertical signal line VSL_{nb} to the south-side ADC 252. With this, the pixel signals are read from the shared blocks 400-1 in the odd-numbered rows. The alternate long and short dash lines in a and b in the drawing indicate the paths along which the pixel signals are transmitted.

Next, as illustrated in the drawing, the fallback/redundancy control section 220 controls the south-side selector 251 to connect the vertical signal line VSLₙₐ to the south-side ADC 252. Therefore, the pixel signals are read from the shared blocks 400-2 of the even-numbered rows.

The control for reading the odd-numbered rows and the even-numbered rows alternately is executed thereafter, until all of the pixel signals are read. With this fallback operation, even if a failure occurs in one of the north-side and the south side ADCs, the edge device 200 can normally read the pixel signals corresponding to the N columns. However, because the odd-numbered rows and the even-numbered rows cannot be read simultaneously, the read speed is halved, compared with that before the fallback operation.

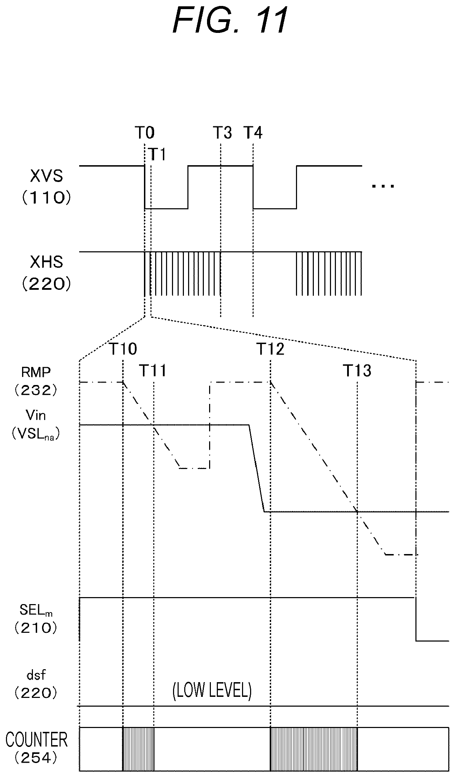

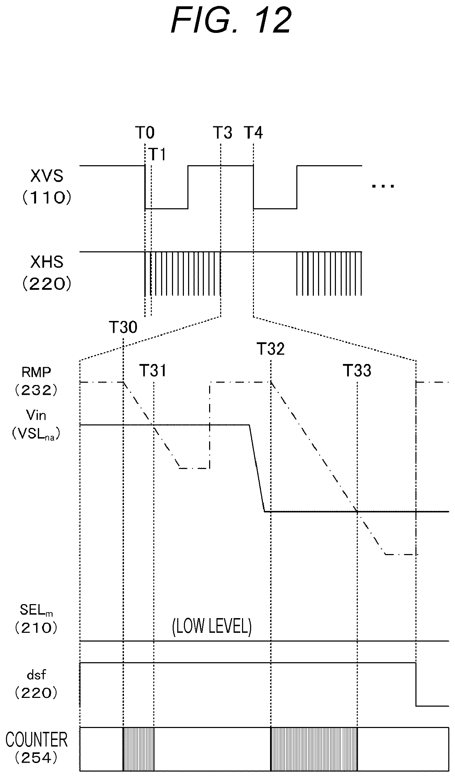

Next, frame read control will be described with reference to Figs. 11 and 12.

Fig. 11 is a timing chart illustrating an example of a read operation in a horizontal scan period according to the first embodiment of the present technology. The edge device 200 generates a frame, in synchronization with the vertical synchronization signal XVS from the host device 110.

In a cycle of the vertical synchronization signal XVS, the fallback/redundancy control section outputs the horizontal synchronization signal XHS to the column signal processing sections 240 and 250 over a horizontal scan period that is a period for reading the pixel signals from the pixels. In the drawing, timings T0 to T4 correspond to the cycle of the vertical synchronization signal, and timings T0 to T3 correspond to the horizontal scan period. Over this horizontal scan period, the control signals dsf input to the dummy source followers 246 and 256 are controlled to the low level.

Over the cycle of the horizontal synchronization signal XHS from the timings T0 to T1, two adjacent rows (e.g., mth and (m+1)th rows) are selected, and the selection signal SELₘ and the selection signal SELₘ₊₁ are controlled to the high level. In the drawing, the waveform of the selection signal SELₘ₊₁ is not illustrated. The following description will also be given focusing on only one of the two rows.

From the timing T10 and thereafter, the south-side DAC 232 gradually drops the level of the ramp signal RMP over a sampling period of the reset level. It is now assumed that the analog signal Vin at the reset level is transmitted via the vertical signal line VSLₙₐ, and the comparison result from the south-side comparator inverts at the timing T11. Over the timings T10 to T11, the south-side counter 254 reads the reset level while performing the down-counting.

After the sampling period of the reset level has elapsed, the DAC 232 raises the level of the ramp signal RMP to the original level. Then, from the timing T12 immediately after the charge has been transmitted and thereafter, the DAC 232 gradually drops the level of the ramp signal RMP over a sampling period of the signal level. It is now assumed that the analog signal Vin at the signal level is transmitted via the vertical signal line VSLₙₐ, and the comparison result from the south-side comparator inverts at the timing T13. Over the timings T12 to T13, the counter 254 reads the signal level while performing up-counting. The count value at this time represents the difference between the reset level and the signal level, and indicates the net pixel signal resultant of the CDS processing.

With the control illustrated in the drawing, pixel signals corresponding to two rows are read in synchronization with the horizontal synchronization signal.

Fig. 12 is a timing chart illustrating an example of a read operation during a V-blank period according to the first embodiment of the present technology. The cycle of the vertical synchronization signal XVS is provided with a certain period in which the horizontal synchronization signal XHS is not output. This period will be referred to as a "V-blank period". The timings T3 to T4 in the drawing correspond to the V-blank period.

The selection signals corresponding to all of the rows, including the selection signal SELₘ, within the V-blank period are controlled to the low level. By contrast, the control signals dsf input to the dummy source followers 246 and 256 are controlled to the high level, so that dummy pixel signals are output.

From the timing T30 and thereafter, the south-side DAC 232 gradually drops the level of the ramp signal RMP. It is now assumed that the analog signal Vin at the reset level is transmitted via the vertical signal line VSLₙₐ, and the comparison result from the south-side comparator inverts at the timing T31. Over the timings T30 to T31, the south-side counter 254 reads the reset level while performing down-counting.

The DAC 232 brings back the level of the ramp signal RMP to the original level, and, from the timing T32 and thereafter, gradually drops the level of the ramp signal RMP over the sampling period of the signal level. It is now assumed that the analog signal Vin at the signal level is transmitted via the vertical signal line VSLₙₐ, and the comparison result from the south-side comparator inverts at the timing T33. Over the timings T32 to T33, the counter 254 reads the signal level while performing the up-counting. The count value at this time represents the difference between the reset level and the signal level, and indicates the net dummy pixel signal resultant of the CDS processing.

As illustrated in Figs. 11 and 12, within the cycle of the vertical synchronization signal, the pixel signals from the entire rows and the dummy pixel signals are read sequentially. In order to distinguish these two, hereinafter, the pixel signal read during the horizontal scan period will be referred to as a "normal pixel signal".

The failure detecting section 350 detects a defect such as a point defect or a streaky defect, on the basis of a frame that is an arrangement of normal pixel signals. However, there is a high possibility that a line defect or a dotted-line-like defect is a defect caused by a failure in the column circuit outside the pixels, and not by a failure in the pixels.

Therefore, the failure detecting section 350 determines whether each of the dummy pixel signals corresponding to the N columns matches a predetermined value. The predetermined value is set to a value that is output in a case where there is no failure in the column circuit. In a case where the dummy pixel signal of a certain column does not match the predetermined value, the failure detecting section 350 determines that a failure has occurred in the column circuit corresponding to that column. In a case where a failure has occurred in the column circuit, if the defect is a streaky defect, it is preferable to perform the redundant operation; and if the defect is a dotted-line-like defect, it is preferable to perform the fallback operation.

Here, the fallback operation can be classified into a speed-based fallback operation and an angle-of-view-based fallback operation. The speed-based fallback operation is a control method that does not cause any deterioration in the image quality of a frame, although the read speed drops. By contrast, the angle-of-view-based fallback operation is a control method that causes a drop in the read speed, and that may cause a deterioration in the image quality of a frame. The setting information in the register 320 determines which one of these operations is performed at a higher priority.

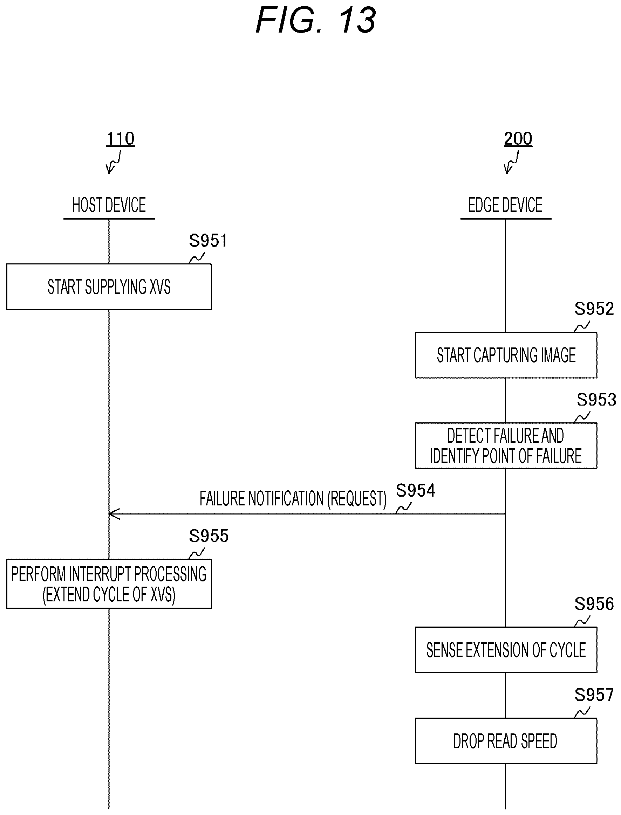

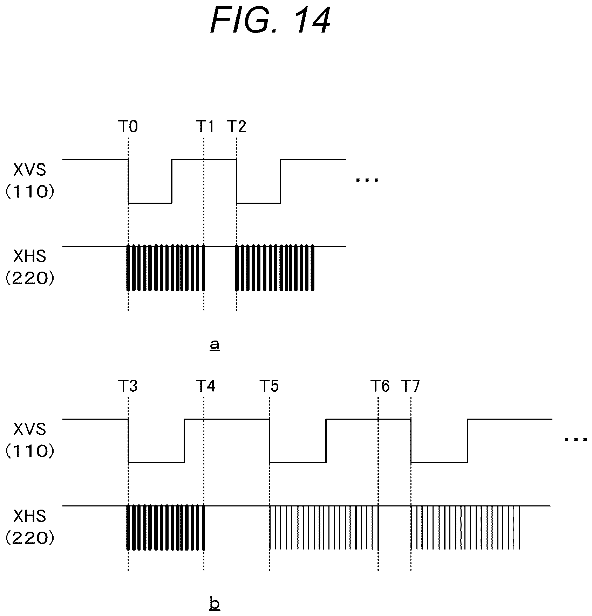

The speed-based fallback operation will be described with reference to Figs. 13 and 14.

Fig. 13 is an example of a sequence chart during the speed-based fallback operation according to the first embodiment of the present technology. The drawing illustrates an example of a sequence in a case where a failure occurs in the column circuit during image capturing, and the speed-based fallback operation is executed.

The host device 110 starts supplying the vertical synchronization signal XVS (step S951), and the edge device 200 starts capturing an image (step S952). Once a failure occurs, the edge device 200 detects the failure, and identifies the point of failure (step S953). Then, the edge device 200 supplies a failure notification including a request for requesting a change in the cycle of the vertical synchronization signal XVS to the host device 110 (step S954).

In response to the request, the host device 110 extends the cycle of the vertical synchronization signal XVS via interrupt processing, so that the image quality does not deteriorate due to the drop in the read speed (step S955).

The edge device 200 senses the extension of the cycle of the vertical synchronization signal XVS (step S956) and drops the read speed (step S957).

Note that, in step S954, the failure notification may include information indicating the point of failure (e.g., a pixel, an ADC, or a vertical signal line) instead of the request. In this case, the host device 110 determines whether or not to extend the cycle on the basis of the point of failure.

Fig. 14 is an example of a timing chart before and after the speed-based fallback operation according to the first embodiment of the present technology. a of the drawing illustrates a timing chart before the speed-based fallback operation, and b of the drawing illustrates a timing chart after the speed-based fallback operation.

As illustrated in a of the drawing, the host device 110 starts supplying the vertical synchronization signal XVS. The edge device 200 reads two rows at a time, in synchronization with the horizontal synchronization signal XHS, during the horizontal scan period, and reads the dummy pixel signals during the V-blank period, within the cycle of the vertical synchronization signal XVS. The timing T0 to T1 in the drawing correspond to the horizontal scan period. The first row and the second row are read at the timing T0, and the (M-1)th row and the Mth row are read at the timing T1. The timings T1 to T2 correspond to the V-blank period.

It is now assumed that the edge device 200 then detects a failure in the ADC after the timing T2, and notifies the host device 110 of the failure.

As illustrated in b of the drawing, the host device 110 extends the cycle of the vertical synchronization signal XVS, for the timing T3 and thereafter. As a result, the V-blank period becomes longer than that before the failure notification. The timings T4 to T5 in the drawing correspond to the V-blank period after the extension.

The edge device 200 senses the extension in the cycle of the vertical synchronization signal XVS, on the basis of the length of the V-blank period. Then, from the timing T5 and thereafter, the edge device 200 reads one row at a time, in synchronization with the horizontal synchronization signal XHS, in the horizontal scan period, and reads the dummy pixel signals in the V-blank period. In a and b of the drawing, the horizontal synchronization signals XHS indicated by the thick lines represent reading in units of two rows, and thin horizontal synchronization signals XHS represent reading in units of one row. Due to the reading in units of one row, the read speed drops. The period from the timings T6 to T7 in the drawing corresponds to the V-blank period after the read speed has dropped, so that a period in which the dummy pixel signals can be read is ensured even after the speed has dropped.

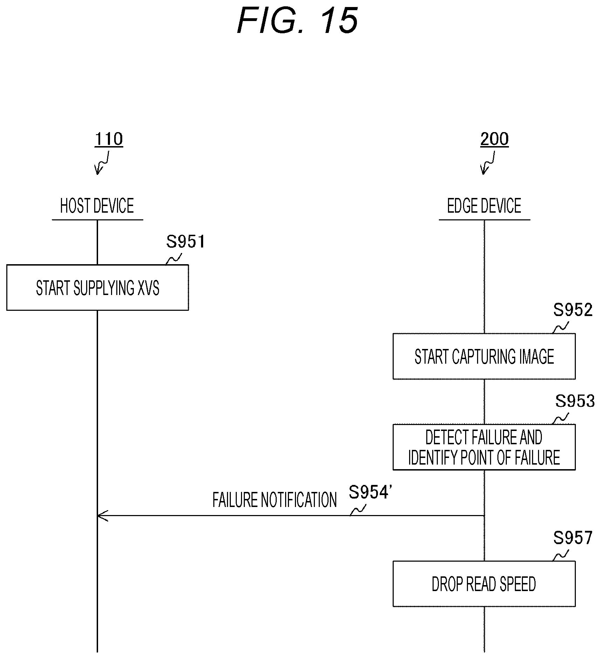

Next, the angle-of-view-based fallback operation will be described with reference to Figs. 15 to 17.

Fig. 15 is an example of a sequence chart during the angle-of-view-based fallback operation according to the first embodiment of the present technology. The drawing illustrates an example of a sequence in a case where a failure occurs in the column circuit during image capturing, and the speed-based fallback operation is executed.

The host device 110 starts supplying the vertical synchronization signal XVS (step S951), and the edge device 200 starts capturing an image (step S952). Once a failure occurs, the edge device 200 detects the failure, and identifies the point of failure (step S953). Then, the edge device 200 supplies a failure notification not including any request to the host device 110 (step S954'). Then, the edge device 200 drops the read speed (step S957).

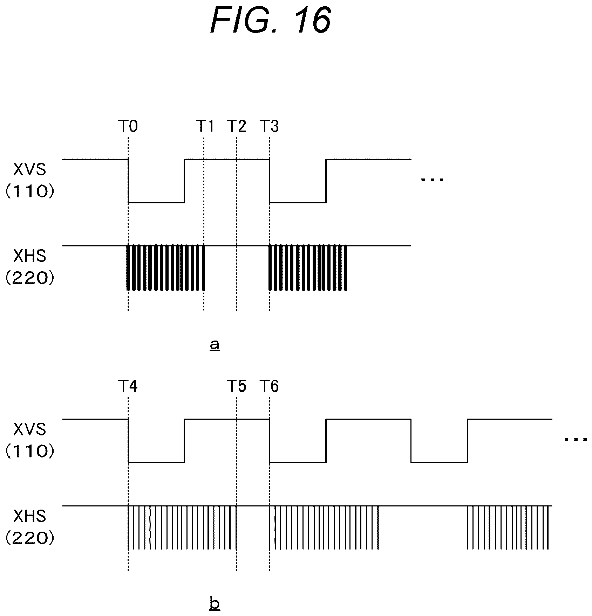

Fig. 16 is an example of a timing chart before and after the angle-of-view-based fallback operation according to the first embodiment of the present technology. a of the drawing illustrates a timing chart before the angle-of-view-based fallback operation, and b of the drawing illustrates a timing chart after the angle-of-view-based fallback operation.

As illustrated in a of the drawing, the edge device 200 reads two rows at a time, in synchronization with the horizontal synchronization signal, during the horizontal scan period, and reads the dummy pixel signals during the V-blank period, within the cycle of the vertical synchronization signal XVS. The period from the timing T0 to T1 in the drawing corresponds to the horizontal scan period, and the period from the timing T1 to T3 corresponds to the V-blank period. It is assumed that this blank period has a margin and is sufficiently longer than the time required for reading the dummy pixel signals. For example, within the V-blank period, the dummy pixel signals are read in the period from the timing T1 to T2, and the period from the timing T2 to T3 corresponds to the margin.

Then, it is assumed that the edge device 200 detects the failure of the ADC at the timing T3 or thereafter, and notifies the host device 110 of the failure.

As illustrated in b of the drawing, the edge device 200 extends the horizontal scan period by the margin, and reads one row at a time, in synchronization with the horizontal synchronization signal, during the period. In a and b of the drawing, the horizontal synchronization signals XHS indicated by the thick lines represent reading in units of two rows, and thin horizontal synchronization signals XHS represent reading in units of one row. Furthermore, the period from the timing T5 to T6 corresponds to the V-blank period after the read speed has been dropped, and the period allowing the dummy pixel signals to be read is ensured, although the margin is reduced.

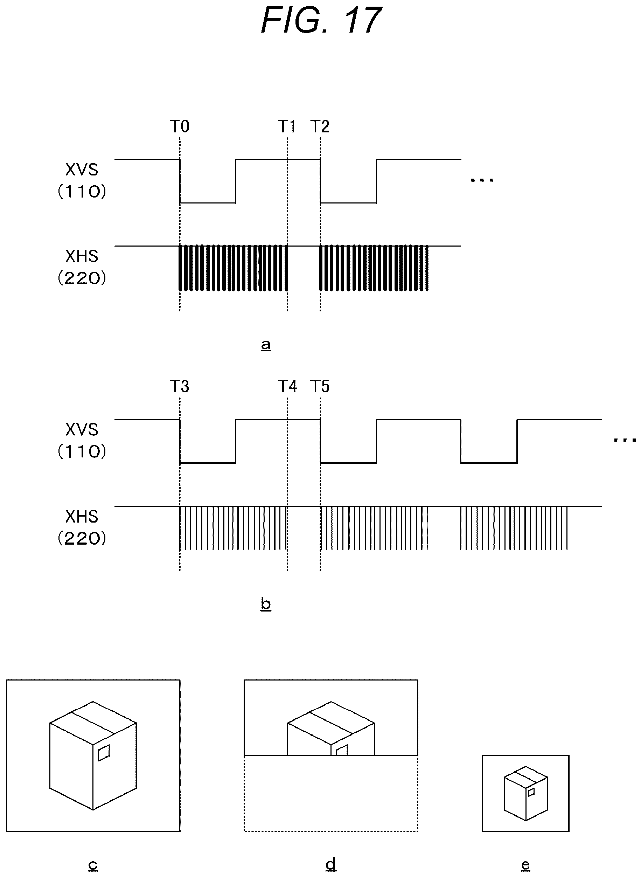

Fig. 17 is an example of a timing chart and frames before and after the angle-of-view-based fallback operation according to the first embodiment of the present technology. a of the drawing illustrates a timing chart before the angle-of-view-based fallback operation, and b of the drawing illustrates a timing chart after the angle-of-view-based fallback operation. c in the drawing illustrates an example of a frame before the angle-of-view-based fallback operation, and d and e in the drawing illustrate an example of frames after the angle-of-view-based fallback operation.

As illustrated in a of the drawing, the edge device 200 reads two rows at a time, in synchronization with the horizontal synchronization signal, in the horizontal scan period, and reads the dummy pixel signal during the V-blank period, within the cycle of the vertical synchronization signal XVS. The period from the timing T0 to T1 in the chart corresponds to the horizontal scan period, and the period from the timing T1 to T2 corresponds to the V-blank period. It is assumed that a sufficient margin is not ensured in this blank period.

In this case, as illustrated in b of the drawing, the edge device 200 reads one row at a time, in synchronization with the horizontal synchronization signal, during the horizontal scan period, without changing the length of the horizontal scan period. In a and b of the drawing, the horizontal synchronization signals XHS indicated by the thick lines represent reading in units of two rows, and thin horizontal synchronization signals XHS represent reading in units of one row. With this reduction in the read speed, the angle of view of the frame is reduced.

For example, as illustrated in d of the drawing, a half of the frame is missing, compared with c prior to the reduction in the drawing. Alternatively, decimated read is performed, so that the number of pixels (that is, the resolution) is reduced, as illustrated in e of the drawing.

As illustrated in Figs. 16 and 17, in the angle-of-view-based fallback operation, if there is a sufficient margin in the V-blank period, the image quality of the frame does not deteriorate, but if there is no margin, the image quality deteriorates.

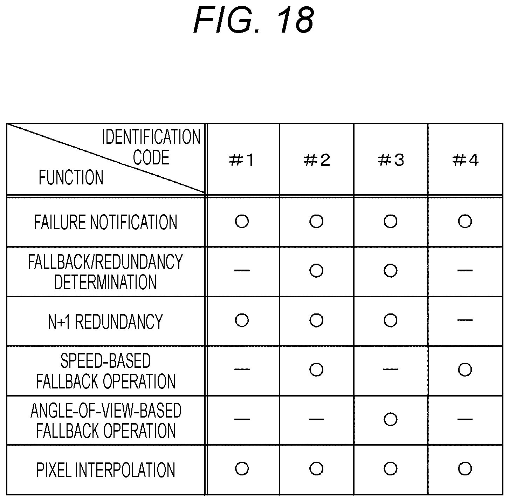

Fig. 18 is a diagram illustrating an example of setting information in the register 320 according to the first embodiment of the present technology. The setting information includes, for example, an identification code. The identification code is a code assigned to a combination of priorities of (or status of enabling or not) the respective functions of the edge device 200. The functions include a failure notification function, a fallback/redundancy determination function, an N+1 redundancy function, a speed-based fallback operation function, the angle-of-view-based fallback operation function, a pixel interpolation function, and the like.

For example, in the identification code #1, higher priorities are set to the failure notification, the N+1 redundancy, and the pixel interpolation function, than those set to the other functions. Alternatively, these functions are set to enabled. In a case where this code is set, the pixel interpolation is executed at the time of a pixel failure, and the redundancy switchover is executed at the time of a column circuit failure.

In the identification code #2, higher priorities are set to the failure notification, the fallback/redundancy determination, the N+1 redundancy, the speed-based fallback operation, and the pixel interpolation functions, than those set to the other functions. Alternatively, these functions are set to enabled. In a case where this code is set, at the time of a column circuit failure, and if the defect is a streaky defect, the redundancy switchover is executed, and if the defect is a dotted-line-like defect, the speed-based fallback operation is executed. Furthermore, the pixel interpolation is executed at the time of a pixel failure.

In the identification code #3, higher priorities are set to the failure notification, the fallback/redundancy determination, the N+1 redundancy, the angle-of-view-based fallback operation, and the pixel interpolation function, than those set to the other functions. Alternatively, these functions are set to enabled. In a case where this code is set, at the time of a column circuit failure, if the defect is a streaky defect, the redundancy switchover is executed, and if the defect is a dotted-line-like defect, the angle-of-view-based fallback operation is executed. Furthermore, the pixel interpolation is executed at the time of a pixel failure.

In the identification code #4, higher priorities are set to the failure notification, the speed-based fallback operation, and the pixel interpolation function, than those set to the other functions. Alternatively, these functions are set to enabled. In a case where this code is set, at the time of a pixel failure, the pixel interpolation is executed, and the speed-based fallback operation is executed at the time of a column circuit failure.

The combination of the priorities corresponding to each code is not limited to that illustrated in the drawing, and the user can set to any combination in a manner suitable for the use case of the imaging system 100. Furthermore, the functions to which the priorities can be set are not limited to those illustrated in the drawing, and various types of failure-related functions may be added.

Here, let us assume a configuration in which the edge device 200 does not retain the setting information illustrated in the drawing, as a comparative example.

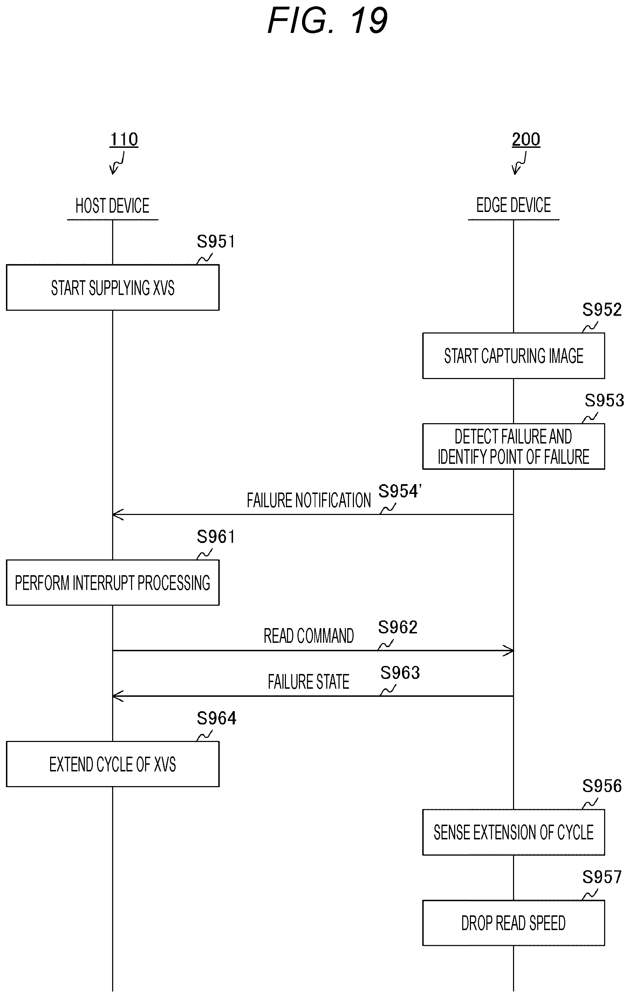

Fig. 19 is an example of a sequence chart during the speed-based fallback operation in the comparative example. The host device 110 starts supplying the vertical synchronization signal XVS (step S951), and the edge device 200 starts capturing an image (step S952). Once a failure occurs, the edge device 200 detects the failure, and identifies the point of failure (step S953). Then, the edge device 200 supplies a failure notification not including any request to the host device 110 (step S954'). In the comparative example without the setting information, the edge device 200 cannot determine whether or not to perform the speed-based fallback operation, and therefore cannot transmit the request for changing the cycle of the vertical synchronization signal XVS at this point of time.

The host device 110 issues a read command requesting transmission of a failure state, through interrupt processing (step S961), and transmits the read command to the edge device 200 (step S962).

The edge device 200 generates information of the failure state indicating the point of failure, in response to the read command, and transmits the information to the host device 110 (step S963).

The host device 110 determines that the speed-based fallback operation is necessary on the basis of the failure state, and extends the cycle of the vertical synchronization signal XVS (step S964).

The edge device 200 senses the extension of the cycle of the vertical synchronization signal XVS (step S956) and drops the read speed (step S957).

As illustrated in the drawing, in the comparative example, because the point of failure is unknown on the side of the host device 110, it is necessary to inquire of the edge device 200 about the point of failure, and determine whether to execute the redundant operation or the fallback operation, depending on the response. Due to this inefficient exchange, response of the failure may be delayed, and the reliability of the imaging system 100 may deteriorate.

By contrast, in the first embodiment in which the priority-based setting information is retained, the determination as to whether or not to execute the redundant operation or the fallback operation is made on the side of the edge device 200 on the basis of the point of failure, so that the response to the failure can be taken quickly. Therefore, the reliability of the imaging system 100 can be improved.

Furthermore, by updating the setting information, the user can change the priority of each function in any way. For example, in a case where image quality degradation due to pixel interpolation is not acceptable, the priority of pixel interpolation can be lowered. Alternatively, in a case where it is desired to maintain the frame rate, the priority of the redundancy switchover or the speed-based fallback operation can be increased.

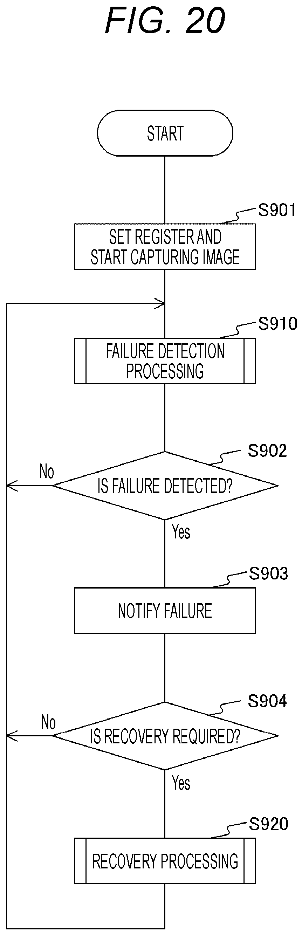

Fig. 20 is a flowchart illustrating an example of an operation of the edge device 200 according to the first embodiment of the present technology. This operation is started, for example, when power is supplied to the edge device 200. Furthermore, it is assumed that the failure notification function is set as enabled, by the setting information in the register 320.

The edge device 200 retains the setting information in the register 320 according to the user's operation, and starts capturing images (step S901). Then, the edge device 200 executes failure detection processing every time a frame is captured (step S910).

The edge device 200 determines whether a failure is detected by the failure detection processing (step S902). In a case where a failure is detected (step S902: Yes), the edge device 200 notifies the host device 110 of the failure (step S903). Then, the edge device 200 determines whether or not recovery processing, such as redundancy switchover or fallback operation, is necessary depending on whether or not the failure coordinates are within the variable range of the ROI (step S904).

In a case where the recovery processing is necessary (step S904: Yes), the edge device 200 executes the recovery processing (step S920) and repeats step S910 and the subsequent steps. Furthermore, in a case where no failure is detected (step S902: No) or in a case where recovery is not necessary (step S904: No), the edge device 200 repeats step S910 and the subsequent steps.

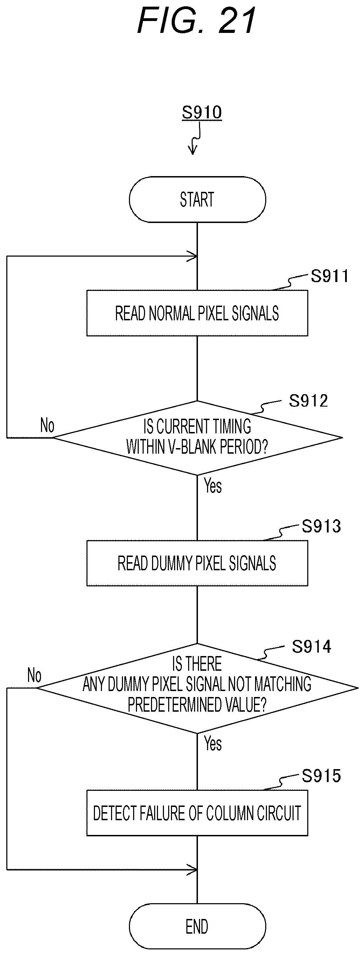

Fig. 21 is a flowchart illustrating an example of the failure detection processing according to the first embodiment of the present technology.

The edge device 200 reads the normal pixel signals sequentially, in units of two rows (step S911). The edge device 200 determines whether or not the current timing is within the V-blank period (step S912). In a case where the current timing is not within the V-blank period (step S912: No), the edge device 200 continues executing step S911.

In a case where the current timing is within the V-blank period (step S912: Yes), the edge device 200 reads dummy pixel signals from all of the columns (step S913). Then, the edge device 200 determines whether or not there is any dummy pixel signal not matching the predetermined value (step S914).

In a case where there is a dummy pixel signal not matching the predetermined value (step S914: Yes), the edge device 200 detects a failure in the column circuit corresponding to the column resulted in non-match (step S915). In a case where there is no dummy pixel signal not matching the predetermined value (step S914: No), or after step S915, the edge device 200 ends the failure detection processing.

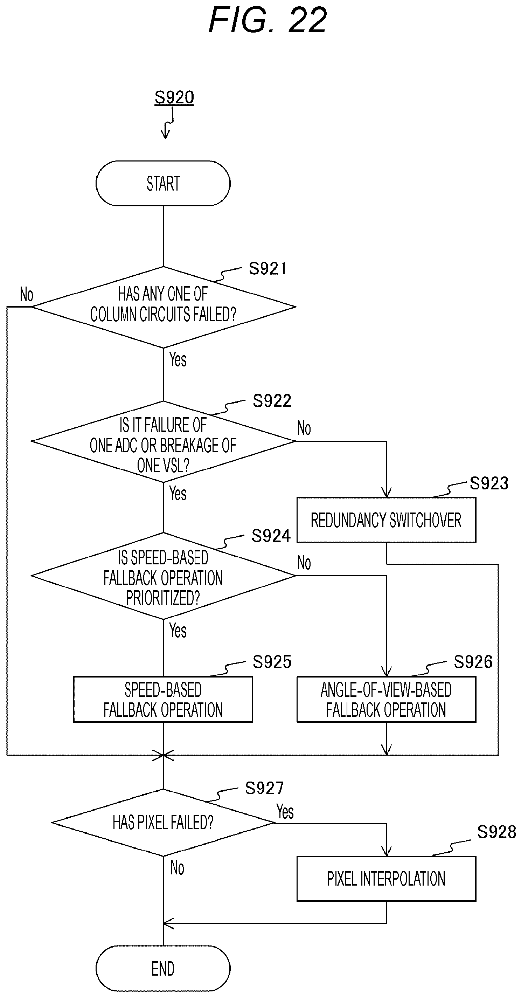

Fig. 22 is a flowchart illustrating an example of the recovery processing according to the first embodiment of the present technology. It is assumed that the fallback/redundancy determination function, the N+1 redundancy function, the speed-based fallback operation function or the angle-of-view-based fallback operation function, and the pixel interpolation function are set as enabled, in the setting information in the register 320.

The edge device 200 determines whether any of the column circuits has failed (step S921). In a case where any of the column circuits has failed (step S921: Yes), the edge device 200 determines whether or not the failure is a failure of one ADC or a breakage of one vertical signal line VSL (step S922). In a case where both of the north and south ADCs have failed or the two vertical signal lines VSLs have broken (step S922: No), the edge device 200 performs the redundancy switchover (step S923).

In a case where one ADC has failed or one vertical signal line VSL has broken (step S922: Yes), the edge device 200 determines whether the speed-based fallback operation is prioritized on the basis of the setting information in the register 320 (step S924).

In a case where the speed-based fallback operation is prioritized (step S924: Yes), the edge device 200 performs the speed-based fallback operation (step S925). By contrast, in a case where the angle-of-view-based fallback operation is prioritized (step S924: No), the edge device 200 performs the angle-of-view-based fallback operation (step S926).

In a case where there is no failure in the column circuit (step S921: No), or after steps S923, S925, and S926, the edge device 200 determines whether there is a pixel failure (step S927). In a case where there is a pixel failure (step S927: Yes), the edge device 200 performs the pixel interpolation (step S928).

In a case where the pixel has not failed (step S927: No), or after step S928, the edge device 200 ends the recovery processing.

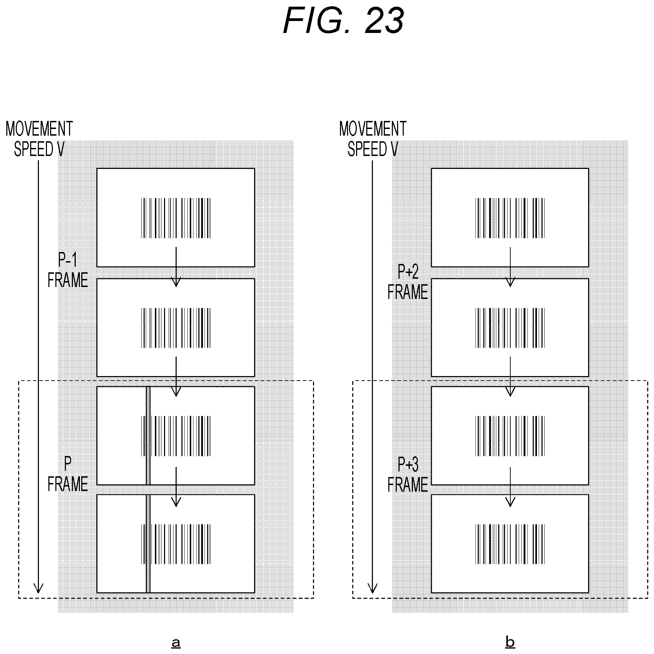

Next, a use case of the imaging system 100 will be described with reference to Figs. 23 to 25. For example, the imaging system 100 is applied to an industrial camera that captures image of an object being moved by a belt conveyor. A barcode is printed on an object an image of which is to be captured, and a predetermined range including the barcode is set as an ROI. The moving speed of the belt conveyor is denoted by V. Furthermore, assuming that the angle of view becomes smaller during the angle-of-view-based fallback operation, the imaging range is adjusted so that two barcodes fit within one frame.

a in the drawing illustrates an example of a frame captured before the redundancy switchover, and b in the drawing illustrates an example of a frame captured after the redundancy switchover.

As illustrated in a in the drawing, for example, it is assumed that a streaky defect has appeared in a Pth frame (where P is an integer). The dotted line in a in the drawing indicates the range of the Pth frame. At this time, the edge device 200 detects a failure of a column circuit, and performs redundancy switchover.

As illustrated in b of the drawing, the column circuit in which the failure has occurred is isolated from the pixels, by the redundancy switchover, so that the streaky defect ceases to appear. Furthermore, because the cycle of the vertical synchronization signal remains unchanged, the frame rate remains unchanged, and the moving speed of the belt conveyor also remains at V.

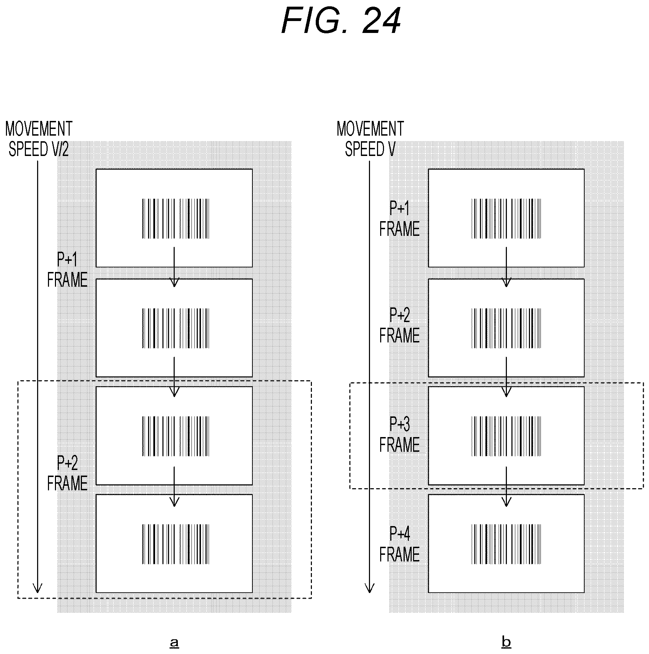

Fig. 24 is a diagram illustrating an example of frames during the fallback operation according to the first embodiment of the present technology. a in the drawing illustrates an example of a frame captured after the speed-based fallback operation, and b in the drawing illustrates an example of a frame captured after the angle-of-view-based fallback operation.

As illustrated in a in the drawing, during the speed-based fallback operation, the imaging system 100 drops the moving speed of the belt conveyor to 2/V. Furthermore, although the angle of view does not change, the cycle of the vertical synchronization signal is extended to twice that before the fallback operation, so that the frame rate is halved.

As illustrated in b of the drawing, the angle of view is halved during the angle-of-view-based fallback operation. However, because the cycle of the vertical synchronization signal remains unchanged, the frame rate remains unchanged, and the moving speed of the belt conveyor also remains at V.

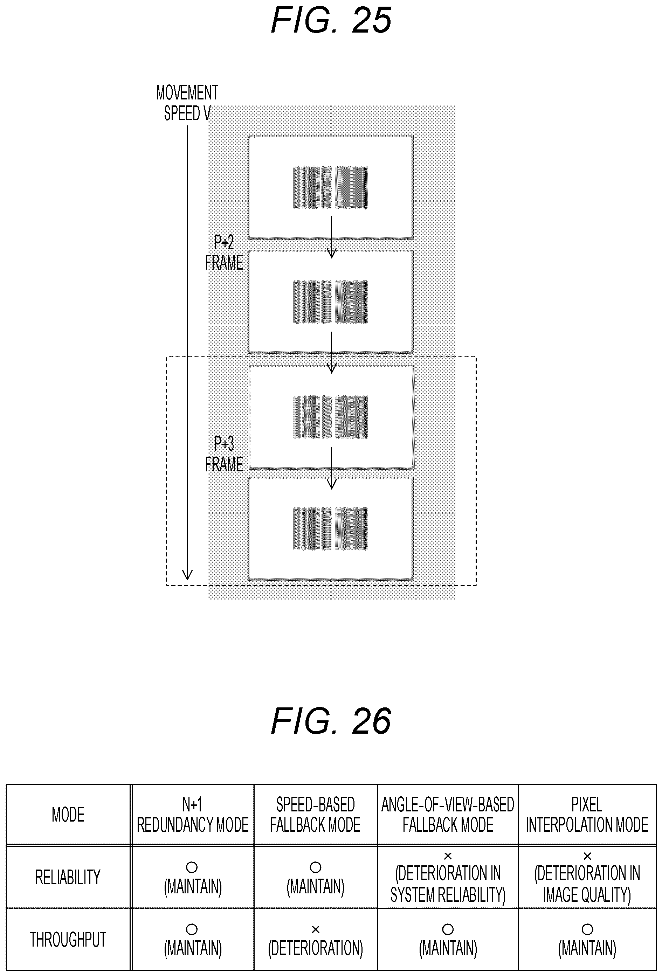

Fig. 25 is a diagram illustrating an example of frames during the pixel interpolation according to the first embodiment of the present technology. As illustrated in the drawing, when the number of pixels interpolated in the pixel interpolation is larger, the image quality of the frame deteriorates more. However, because the cycle of the vertical synchronization signal remains unchanged, the frame rate remains unchanged, and the moving speed of the belt conveyor also remains at V. Note that, in practice, the image quality deteriorates only along the periphery of the interpolated part, but the drawing illustrates the image quality of the overall image as having deteriorated, in order to emphasize the deterioration in the image quality.

Fig. 26 is a diagram illustrating an example of evaluations of each mode according to the first embodiment of the present technology. A state in which the edge device 200 is executing the redundancy switchover will be referred to as an N+1 redundancy mode, and a state in which the speed-based fallback operation is being executed will be referred to as a speed-based fallback mode. A state in which the edge device 200 is executing the angle-of-view-based fallback operation will be referred to as an angle-of-view-based fallback mode, and a state in which pixel interpolation is being executed will be referred to as a pixel interpolation mode. Evaluations of the reliability and throughput were carried out for these modes.

In the N+1 redundancy mode, the reliability and throughput are both maintained to the level substantially the same as that before the mode transition. In the speed-based fallback mode, the reliability is maintained, but the throughput is lower than that before the mode transition. In the angle-of-view-based fallback mode, the reliability of the imaging system 100 is lower than that before the mode transition, because of the reduction in the angle of view, but the throughput is maintained. In the pixel interpolation mode, reliability is lower than that before the mode transition, because of the reduction in the image quality, but throughput is maintained.

With the setting information in the register 320, the user can set the priority of each of the functions, by giving consideration to the characteristics described above. By setting the priority of the fallback operation to high, in case of a failure of the edge device 200 in a distribution system, an in-vehicle camera, or the like, imaging can be continued by the fallback operation until replacement.

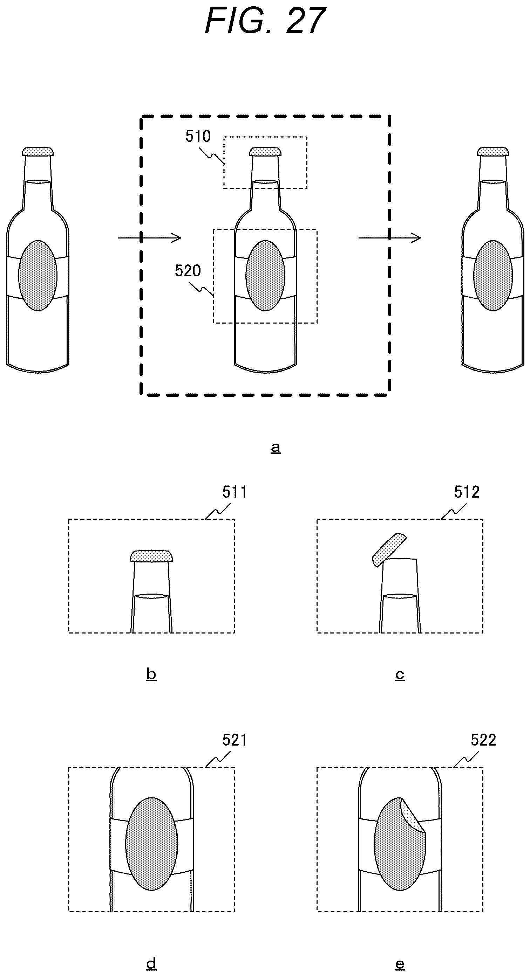

Next, another use case will be described with reference to Figs. 27 to 28. In this use case, the imaging system 100 is used for quality inspection or the like by setting predetermined regions including a cap and a label of a subject as ROIs.

Fig. 27 illustrates an example of frames and regions of interest (ROIs), according to the first embodiment of the present technology. a in the drawing illustrates an example of a frame. In the drawing, b, c, d, and e illustrate examples of the ROIs.

As illustrated in a of the drawing, the edge device 200 captures an image of a bottle being moved by a belt conveyor. The thick dotted line in a of the drawing indicates the area of the frame. A predetermined area including the cap of the bottle is set as an ROI 510, and a predetermined area including the label is set as an ROI 520.

The host device 110 analyzes these ROIs and inspects whether the cap has not detached, and whether there is any peeling in at least a part of the label. As illustrated in b of the drawing, in a case where an ROI 511 without the detachment of the cap is obtained, the host device 110 determines the presence of a normal condition in the inspection. By contrast, as illustrated in c of the drawing, in a case where an ROI 512 with detachment of the cap is obtained, the host device 110 detects an error in the inspection.

Furthermore, as illustrated in d of the drawing, in a case where an ROI 521 without any peeling of the label is obtained, the host device 110 determines the presence of a normal condition in the inspection. By contrast, as illustrated in e of the drawing, in a case where the ROI 522 with peeling of a part of the label is obtained, the host device 110 detects an error in the inspection.

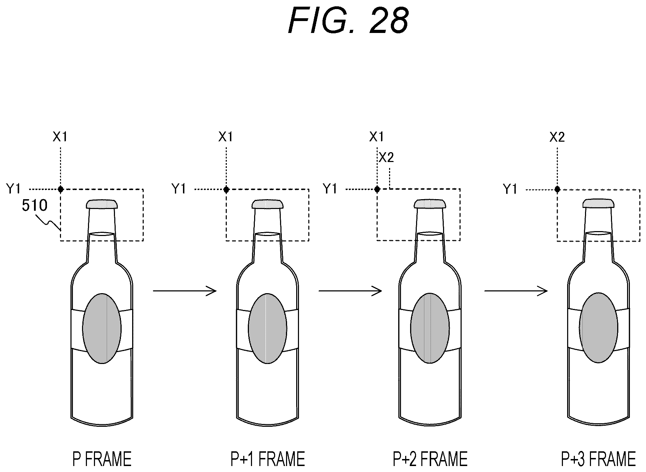

Fig. 28 is a diagram illustrating an example of a change in the ROI coordinates according to the first embodiment of the present technology. In the Pth frame, the upper left coordinates of the ROI 510 are set to (X1, Y1) of the frame.

In the (P+2)th frame, it is assumed that the position of the cap in the ROI 510 has shifted somewhat toward the right side, from that at the time of the initial setting, due to factors such as displacement of the bottle, vibration, or a change in the speed of the belt conveyor. In a case where there is such a deviation in the alignment, the host device 110 senses the deviation in the alignment, through the analysis of the ROI 510, and changes the coordinates of the ROI in accordance with the deviation.

For example, in the (P+3)th frame, the upper left coordinate of the ROI 510 is set to (X2, Y1) with reference to X2 that is on the right side of X1. In this manner, the coordinates of the ROI are changed within a certain range.

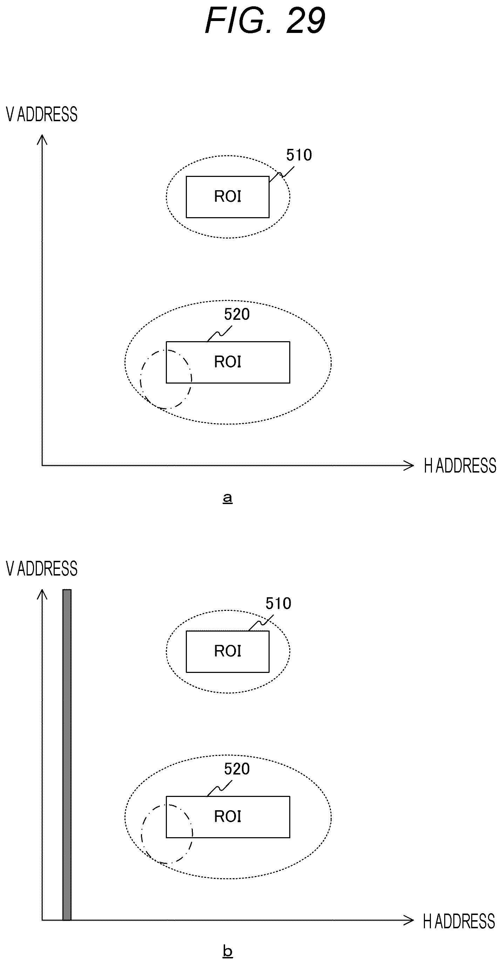

Fig. 29 is a diagram illustrating an example of the ROI setting according to the first embodiment of the present technology. In the drawing, a indicates a frame without a defect, and b in the drawing indicates a frame with a defect. In a and b of the drawing, the vertical axis represents a V address in the vertical direction, and the horizontal axis represents an H address in the horizontal direction.

The ROIs 510 and 520 are set to the frame, as illustrated in a of the drawing. The host device 110 is permitted to change the coordinates of each of the ROIs, as described earlier. The dotted lines a and b in the drawing indicate the variable ranges of the respective ROIs. Furthermore, the alternate long and short dash lines indicate the ranges where the lower left coordinates of the ROI 520 change. These ranges of change are obtained from a statistical distribution of the ROIs over a predetermined number of frames.

As illustrated in b of the drawing, in a case where a defect such as a streaky defect is formed outside the variable range of the ROI, the host device 110 updates the setting information so as to lower the priority of the redundancy switchover and the fallback operation for eliminating the defect. Alternatively, the host device 110 ignores the defect without updating the setting information. In this manner, by changing the priority of the redundancy switchover and the fallback operation on the basis of the statistical distributions of the ROIs, it is possible to avoid wasteful execution of switching and failbacks for bringing back to the original setting after the switching. When switching and the like take place in a complicated manner, processing of a subsequent circuit or the imaging system 100 becomes complicated, and thus, it is desirable to avoid unnecessary switching and the like.

As described above, according to the first embodiment of the present technology, in a case where there is a failure in the column circuit 281, the fallback/redundancy control section 220 switches the point where each of the column circuits 281 and the redundant column circuit 282 is connected, so that it is possible to suppress a deterioration in the image quality of a frame. Therefore, the reliability of the imaging system 100 can be improved.

Furthermore, by retaining the priority-based setting information in the register 320, it is possible to determine whether or not to execute the redundant operation or the fallback operation on the side of the edge device 200, depending on the point of failure, and thus, it is possible to respond to the failure quickly.

Furthermore, the host device 110 changes the priorities of the redundancy switchover and the fallback operation on the basis of the statistical distribution of the ROI, so that unnecessary switching and failbacks are avoided.

### <2. Second Embodiment>

In the first embodiment described above, the host device 110 sets an ROI or the like, but the present invention is not limited to this configuration. The edge device 200 according to the second embodiment is different in performing some processing, on behalf of the host device 110.

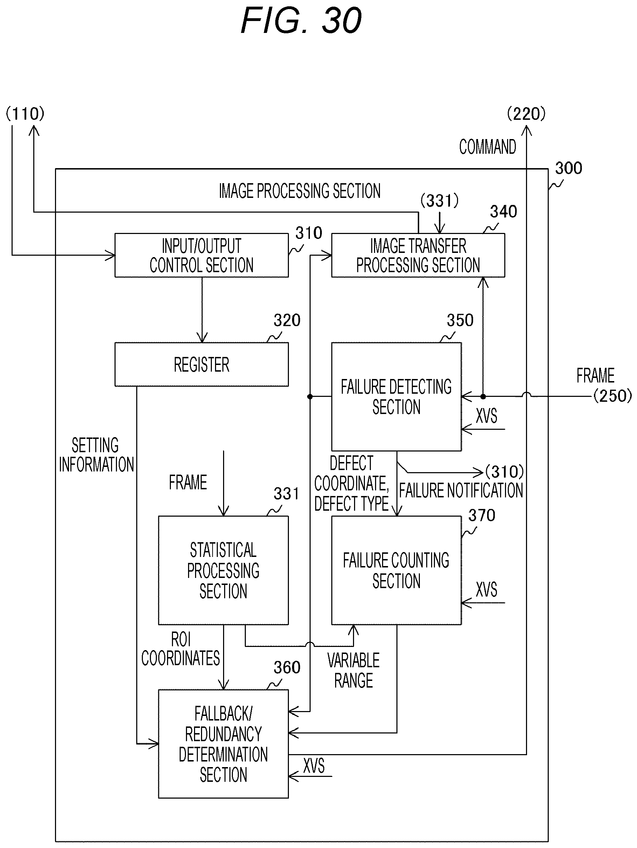

Fig. 30 is a block diagram illustrating a configuration example of the image processing section 300 according to the second embodiment of the present technology. The image processing section 300 according to the second embodiment is different from that according to the first embodiment in further including a failure counting section 370, and in including a statistical processing section 331 instead of the ROI coordinate recording section 330.

The statistical processing section 331 sets an ROI and acquires a variable range thereof by performing statistical processing on a predetermined number of frames. The statistical processing section 331 supplies the ROI coordinates to the fallback/redundancy determination section 360, and supplies the variable range to the failure counting section 370.

The failure counting section 370 receives inputs of a failure notification and the coordinates of a defect from the failure detecting section 350, and an input of the variable range from the statistical processing section 331. The failure counting section 370 counts the number of failures having occurred within the variable range, and supplies a count value to the fallback/redundancy determination section 360.

In a case where the count value from the failure counting section 370 is greater than a predetermined threshold value, the fallback/redundancy determination section 360 performs the redundancy switchover or the fallback operation, on the basis of the setting information in the register 320. With this control, a failure corresponding to a defect having appeared outside the variable range of the ROI is ignored. Note that the fallback/redundancy determination section 360 can also lower the priority of the redundancy switchover or the fallback operation that correspond to the defect having appeared outside the variable range of the ROI, in the setting information.

Note that, of the processing performed by the statistical processing section 331 and the failure counting section 370, the processing performed by the statistical processing section 331 may be executed by the host device 110, and the processing performed by the failure counting section 370 may be executed by the edge device 200.

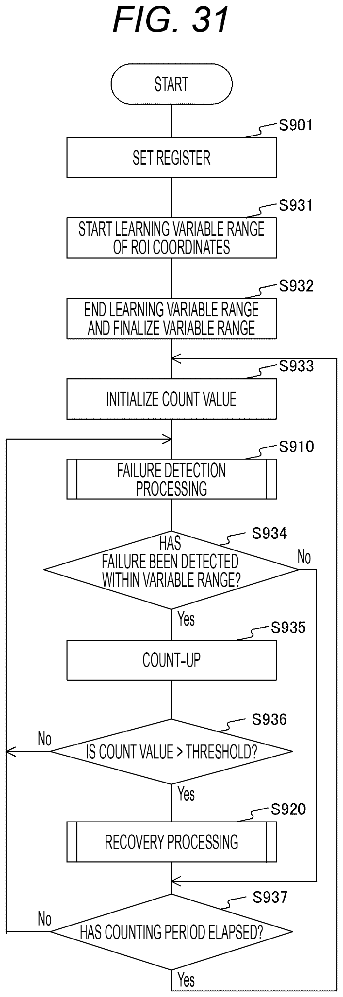

Fig. 31 is a flowchart illustrating an example of an operation of the edge device 200 according to the second embodiment of the present technology. After step S901, the edge device 200 starts learning the variable ranges of ROI coordinates (step S931). In the learning, the edge device 200 sets an ROI to each of a predetermined number of frames, by image recognition or the like. Then, the edge device 200 acquires a statistical distribution of these ROIs, and obtains a variable range of the ROI from the statistical distribution.

The edge device 200 ends learning the ROI variable range, and finalizes the variable range (step S932).

Then, the edge device 200 initializes the failure count value (step S933), and executes the failure detection processing (step S910) every time the frame is captured. The edge device 200 then determines whether any failure is detected within the variable range of the ROI (step S934).

In a case where some failure is detected within the variable range (step S934: Yes), the edge device 200 increments the count value (step S935), and determines whether or not the count value is greater than a predetermined threshold value (step S936).

In a case where the count value is greater than the threshold (step S936: Yes), the edge device 200 executes the recovery processing. (step S920)

In a case where no failure has been detected within the variable range (step S934: Yes), or after step S920, the edge device 200 determines whether a predetermined counting period has elapsed (step S937).

In a case where the count value is equal to or less than the threshold value (step S936: No) or in a case where the counting period has not elapsed (step S937: No), the edge device 200 repeats step S910 and the subsequent steps. In a case where the counting period has elapsed (step S937: Yes), the edge device 200 repeats step S933 and the subsequent steps.

As described above, according to the second embodiment of the present technology, the edge device 200 performs the recovery processing in a case where the count value of failures having appeared within the variable range of the ROI is greater than the threshold value; therefore, it is possible to avoid unnecessary switching and failbacks.

### <3. Third Embodiment>

In the first embodiment described above, the edge device 200 executes the redundancy switchover and the fallback operation on the basis of the setting information in the register 320, so that the south and the north ADCs and the like are required to implement the fallback operation. The edge device 200 according to the third embodiment is different from that in the first embodiment in that the ADCs and the like are omitted, by executing only the redundancy switchover, of the redundancy switchover and the fallback operation.

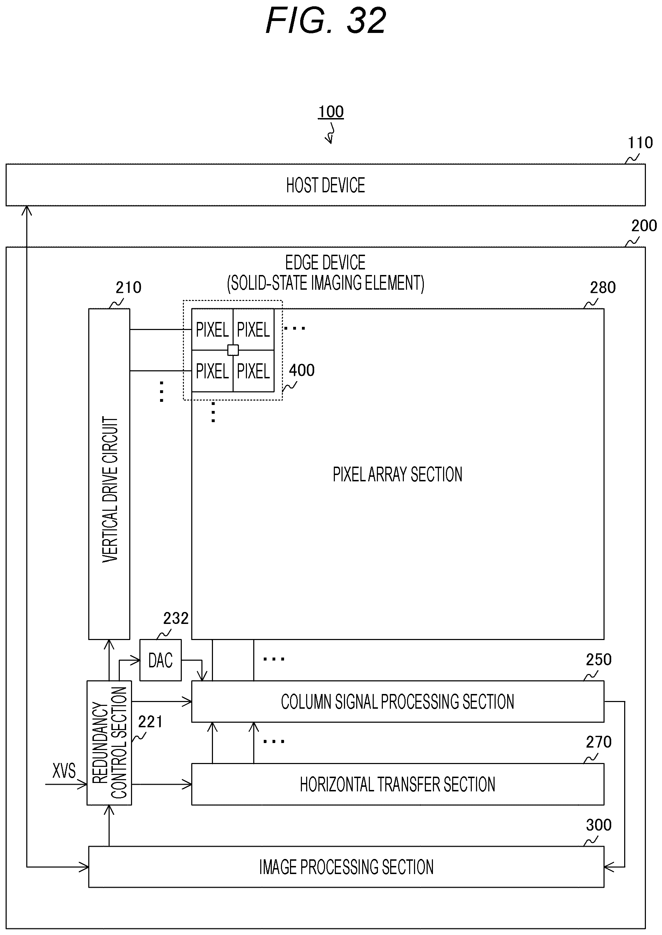

Fig. 32 is a block diagram illustrating a configuration example of an imaging system 100 according to the third embodiment of the present technology. The imaging system 100 according to the third embodiment is different from that of the first embodiment in that a redundancy control section 221 is positioned on the side of the edge device 200, instead of the fallback/redundancy control section 220, and the horizontal transfer section 260, the DAC 231, and the column signal processing section 240 are omitted.

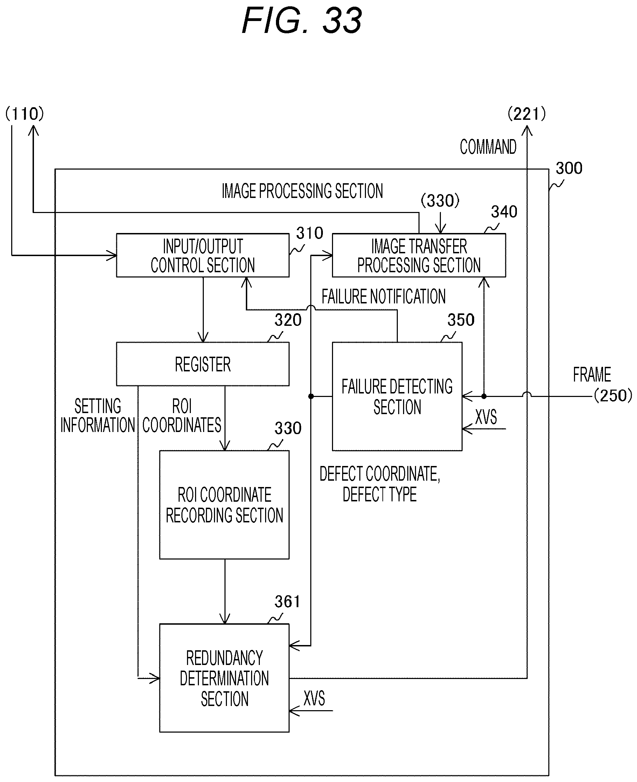

Fig. 33 is a block diagram illustrating a configuration example of an image processing section 300 according to the third embodiment of the present technology. The image processing section 300 according to the third embodiment is different from that of the first embodiment in that a redundancy determination section 361 is positioned instead of the fallback/redundancy determination section 360.

In the third embodiment, in the setting information in the register 320, no priority is set to the fallback operation, and the priorities are set to the redundancy switchover and the pixel interpolation. The redundancy determination section 361 determines whether or not to execute the redundancy switchover on the basis of the setting information.

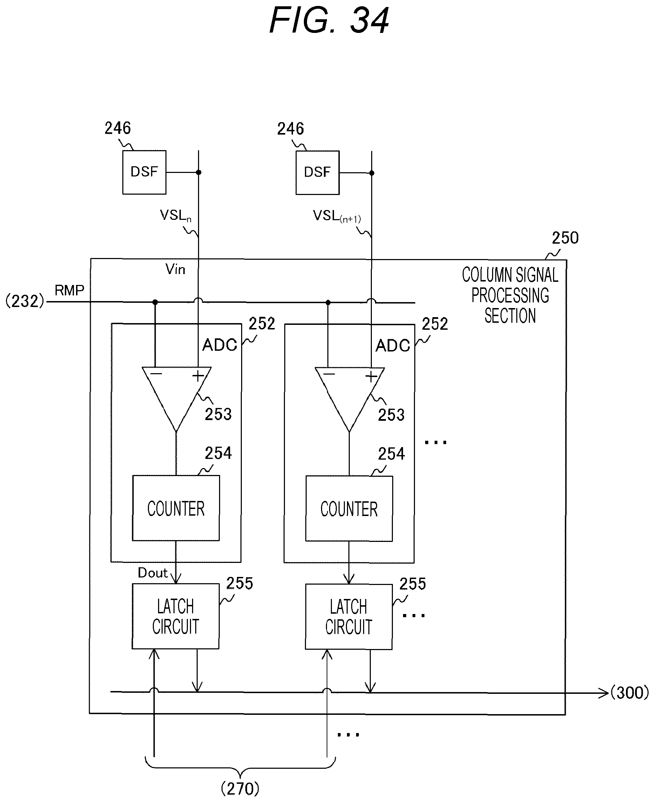

Fig. 34 is a circuit diagram illustrating a configuration example of a column signal processing section 250 according to the third embodiment of the present technology. The column signal processing section 250 according to the third embodiment is different from that of the first embodiment in that the selectors 251 and the dummy source followers 256 are omitted. The north-side dummy source followers 246 are however not omitted.

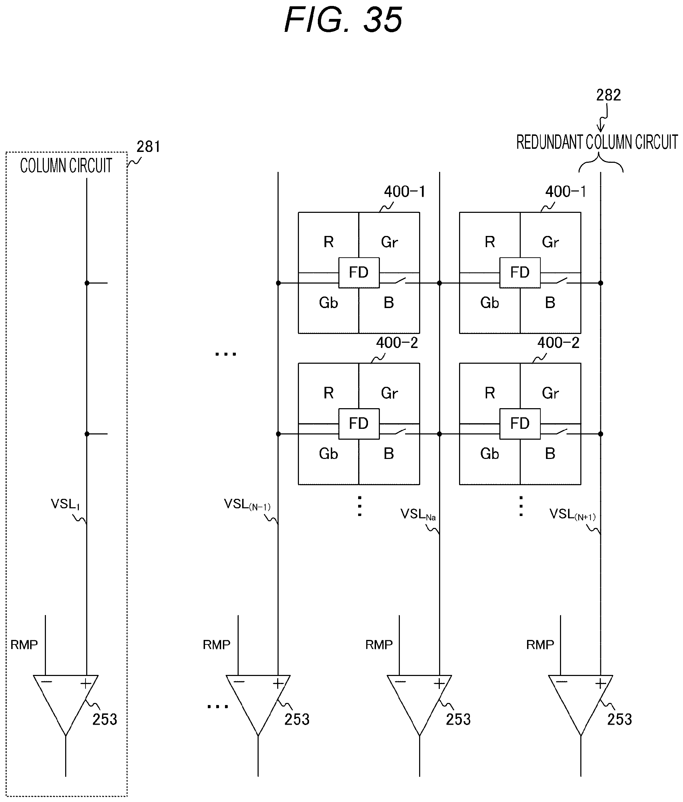

Fig. 35 is a diagram illustrating an example of a pixel array section 280 according to the third embodiment of the present technology. The pixel array section 280 according to the third embodiment is different from that of the first embodiment in that one of the vertical signal lines is omitted in each column of the shared blocks 400.

As illustrated in Figs. 32 to 35, because the fallback operation is not executed in the third embodiment, it is possible to omit the circuits, such as the ADCs and the vertical signal lines for the operation.

Note that, even in a case where the fallback operation is not executed, it is possible to position the north-side horizontal transfer sections 260, DACs 231, and column signal processing sections 240 without being omitted, for the purpose of reading two rows simultaneously. At this time, only the north and the south selectors and a vertical signal line corresponding to each of the columns may be omitted.

Note that the second embodiment can be applied to the third embodiment.

As described above, according to the third embodiment of the present technology, because the edge device 200 performs only the redundancy switchover, of the redundancy switchover and the fallback operation, it is possible to omit the ADCs and the like.

### <4. Fourth Embodiment>

In the first embodiment described above, the edge device 200 executes the redundancy switchover and the fallback operation on the basis of the setting information in the register 320, so that the redundant column circuit 282 is required to implement the redundancy switchover. The edge device 200 according to a fourth embodiment is different from that in the first embodiment in that the redundant column circuit 282 is omitted by executing only the fallback operation, of the redundancy switchover and the fallback operation.

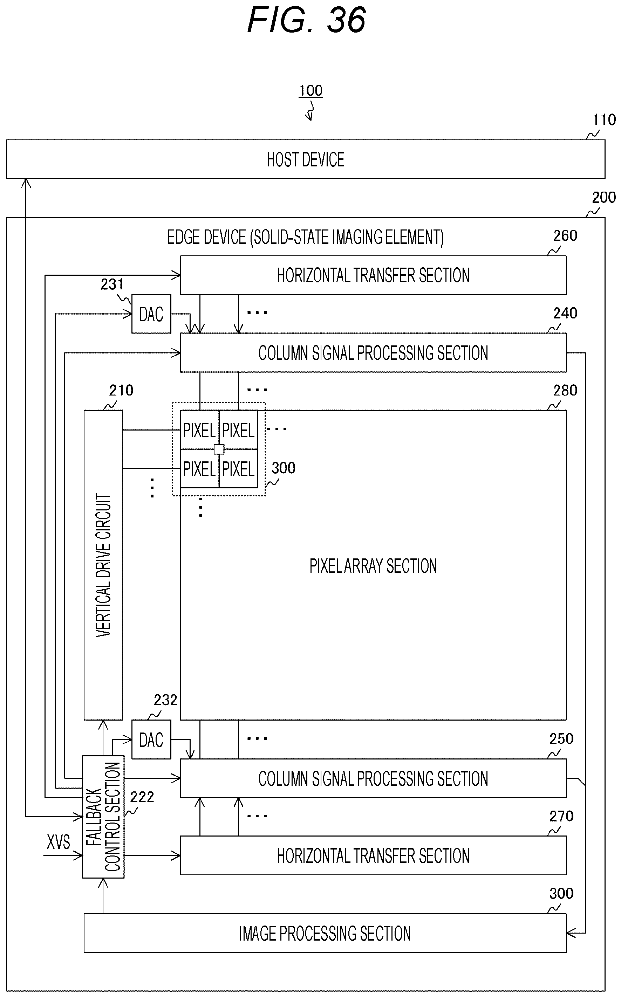

Fig. 36 is a block diagram illustrating a configuration example of an imaging system 100 according to the fourth embodiment of the present technology. The imaging system 100 according to the fourth embodiment is different from that of the first embodiment in that a fallback control section 222 is positioned, instead of the fallback/redundancy control section 220, on the side of the edge device 200.

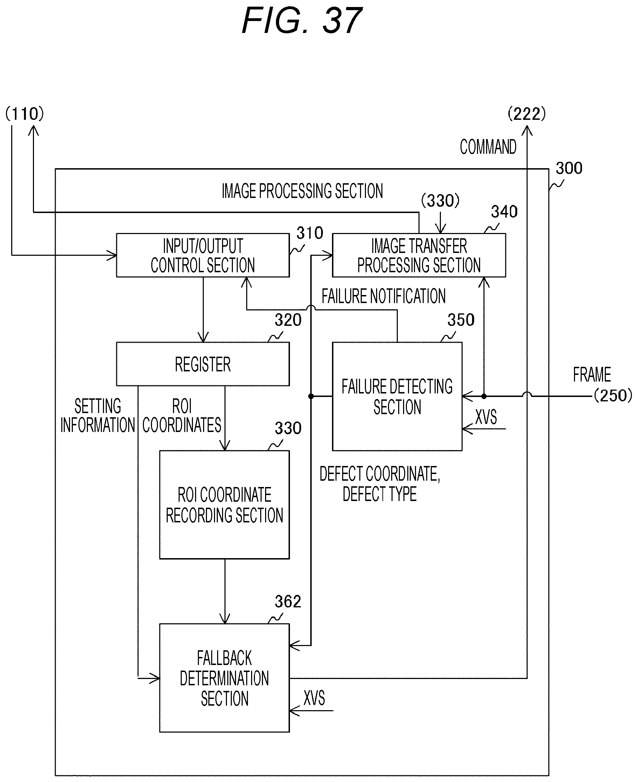

Fig. 37 is a block diagram illustrating a configuration example of an image processing section 300 according to the fourth embodiment of the present technology. The image processing section 300 according to the fourth embodiment is different from that of the first embodiment in that a fallback determination section 362 is positioned, instead of the fallback/redundancy determination section 360.

In the fourth embodiment, in the setting information in the register 320, no priority is set to the redundancy switchover, and the priorities are set to the fallback operation and the pixel interpolation. The fallback determination section 362 determines whether or not to execute the fallback operation on the basis of the setting information.

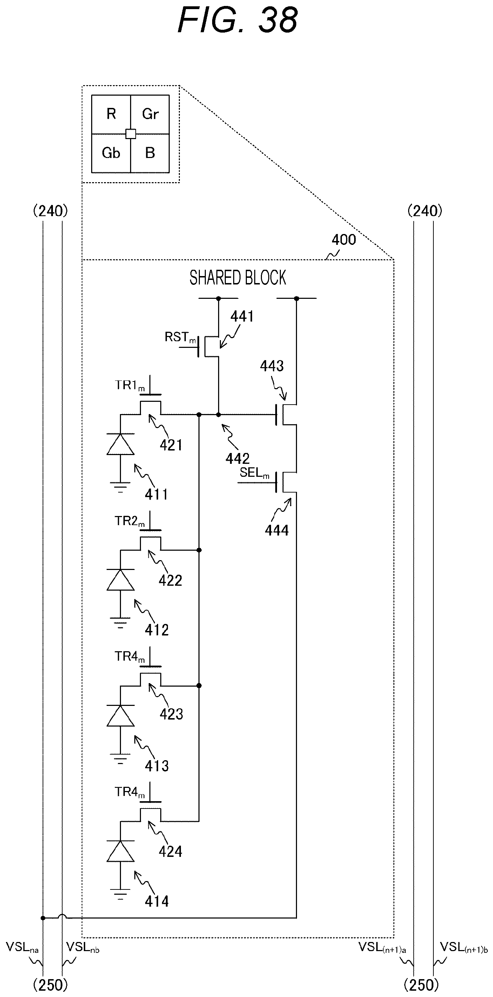

Fig. 38 is a circuit diagram illustrating a configuration example of a shared block 400 according to the fourth embodiment of the present technology. The shared block 400 according to the fourth embodiment is different from that of the first embodiment in that connection transistors 445 and 446, which are required for the redundancy switchover, are omitted. The output node of the selection transistor 444 is connected to one of the vertical signal lines VSLₙₐ and VSL_{nb}. For example, the output node in the odd-numbered row is connected to the vertical signal line VSL_{nb}, and the output node in the even-numbered row is connected to the vertical signal line VSLₙₐ.

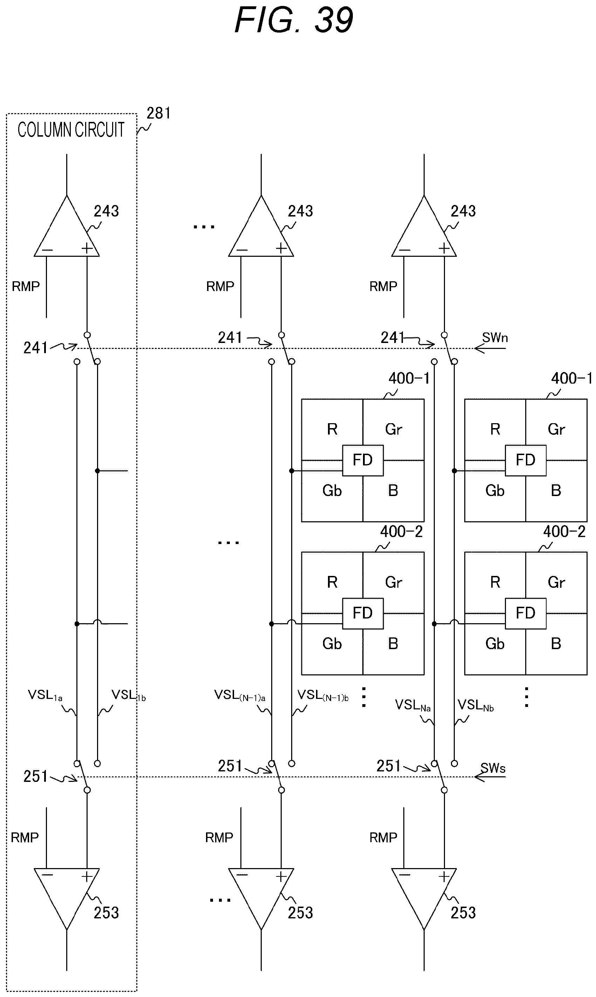

Fig. 39 is a diagram illustrating an example of a pixel array section 280 according to the fourth embodiment of the present technology. The pixel array section 280 according to the fourth embodiment is different from that of the first embodiment in that the redundant column circuit 282 is not positioned.

Note that the second embodiment can be applied to the fourth embodiment.

As described above, according to the fourth embodiment of the present technology, because the edge device 200 executes only the fallback operation, of the redundancy switchover and the fallback operation, it is possible to omit the redundant column circuit 282.

### <5. Application examples to mobile body>

The technology according to the present disclosure (present technology) can be applied to various kinds of products. For example, the technology according to the present disclosure may also be implemented as a device mounted on any type of mobile body such as an automobile, an electric vehicle, a hybrid electric vehicle, a motorcycle, a bicycle, a personal mobility, an airplane, a drone, a vessel, a robot, and the like.

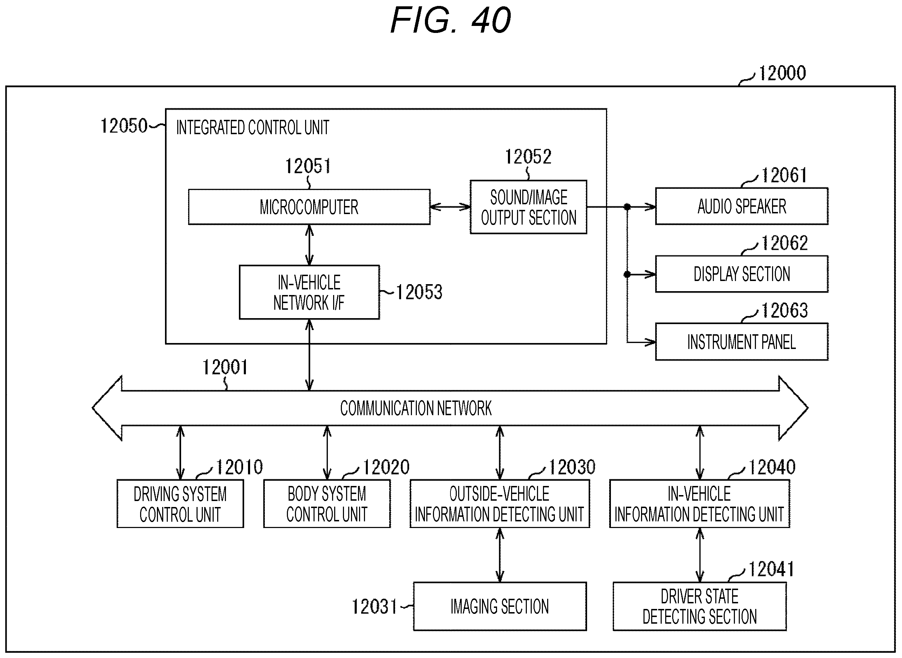

Fig. 40 is a block diagram illustrating an example of a schematic configuration of a vehicle control system, as an example of a mobile body control system to which the technology according to the present disclosure can be applied.

The vehicle control system 12000 includes a plurality of electronic control units connected to each other via a communication network 12001. In the example illustrated in Fig. 40, the vehicle control system 12000 includes a driving system control unit 12010, a body system control unit 12020, an outside-vehicle information detecting unit 12030, an in-vehicle information detecting unit 12040, and an integrated control unit 12050. In addition, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automated driving, which makes the vehicle travel automatedly without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of Fig. 40, an audio speaker 12061, a display section 12062, and an instrument panel 12063 are illustrated as the output device. The display section 12062 may, for example, include at least one of an on-board display and a head-up display.

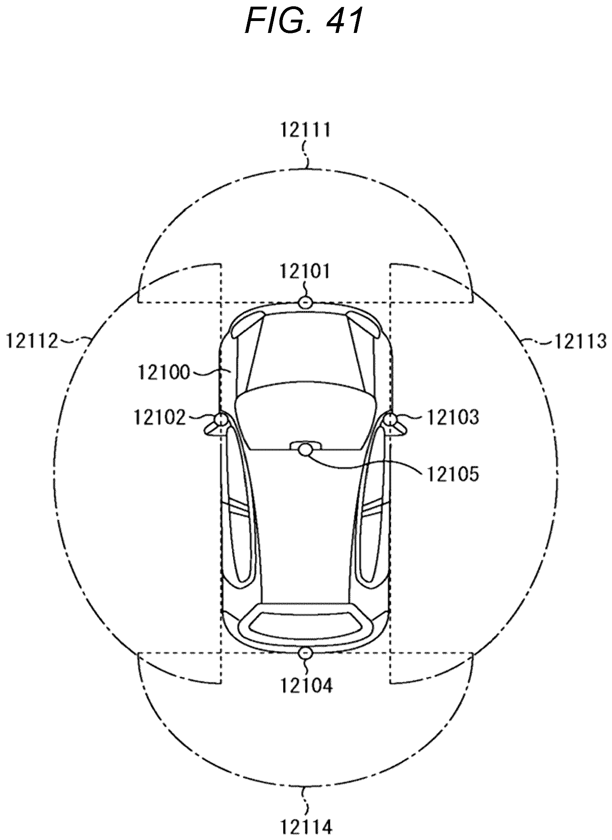

Fig. 41 is a diagram illustrating an example of the position where the imaging section 12031 is installed.

In Fig. 41, imaging sections 12101, 12102, 12103, 12104, and 12105 are included as the imaging section 12031.

The imaging sections 12101, 12102, 12103, 12104, and 12105 are, for example, disposed at positions on a front nose, sideview mirrors, a rear bumper, and a back door of the vehicle 12100 as well as a position on an upper portion of a windshield within the interior of the vehicle. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The imaging section 12105 provided to the upper portion of the windshield within the interior of the vehicle is used mainly to detect a preceding vehicle, a pedestrian, an obstacle, a signal, a traffic sign, a lane, or the like.

Note that Fig. 41 illustrates an example of ranges where the imaging sections 12101 to 12104 capture images. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automated driving that makes the vehicle travel automatedly without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

An example of the vehicle control system to which the technology according to the present disclosure can be applied has been described above. The technology in the present disclosure can be applied, for example, to the imaging section 12031, among the configurations described above. Specifically, the imaging system 100 in Fig. 1 may be applied to the imaging section 12031. By applying the technology according to the present disclosure to the imaging section 12031, it is possible to obtain a captured image that is easier to view, thereby making it possible to reduce driver fatigue.

Note that the embodiments have been described as examples for embodying the present technology, and the matters in the embodiments and the matters defining the invention in the claims have correspondence relationships. Likewise, the respective matters specifying the invention in the claims and the respective matters with the same names in the embodiments of the present technology have correspondence relationships. The present technology, however, is not limited to the embodiments, and can be embodied by applying various kinds of modification to the embodiments without departing from the scope of the present technology.

Note that the effects described herein are merely examples and are not intended to be limiting, and other effects may also be achieved.

Note that the present technology can also have the following configurations.
(1) A solid-state imaging element including:
   a predetermined number of column circuits that read pixel signals;
   a redundant column circuit;
   a failure detecting section that detects presence or absence of a failure in each of the column circuits; and
   a control section that executes, in a case where a failure is detected in any of the column circuits, redundancy switchover for switching points where at least a part of the predetermined number of column circuits and the redundant column circuit are respectively connected.
(2) The solid-state imaging element according to (1), further including a pixel array section including N floating diffusion layers aligned along a predetermined direction, in which
   the predetermined number of column circuits is N,
   prior to any detection of a failure, first to Nth floating diffusion layers are connected to first to Nth column circuits, and
   in a case where an nth column circuit fails, with n being an integer between 1 and N, the control section switches, in the redundancy switchover, points where nth to Nth floating diffusion layers are connected to (n+1)th to Nth column circuits and the redundant column circuit.
(3) The solid-state imaging element according to (1) or (2), in which, in a case where a failure is detected in any of the column circuits, the control section executes one of the redundancy switchover or a fallback operation for reducing a read speed for the predetermined number of column circuits.
(4) The solid-state imaging element according to (3), in which
   each of the predetermined number of column circuits includes:
   first and second analog-to-digital converters;
   first and second vertical signal lines;
   a first selector that connects any one of the first and second vertical signal lines to any one of the first and second analog-to-digital converters; and
   a second selector that connects any one of the first and second vertical signal lines to one of the first and second analog-to-digital converters, and
   in the fallback operation, in a case where one of the first and second analog-to-digital converters or one of the first and second vertical signal lines fails, the control section controls one of the first and second selectors to cause the first and second vertical signal lines to connect alternately to another one of the first and second analog-to-digital converters, in synchronization with a horizontal synchronization signal.
(5) The solid-state imaging element according to (4), further including:
   a retaining section that retains setting information indicating priority of each of the redundancy switchover and the fallback operation; and
   a fallback/redundancy determination section that determines, in a case where a failure is detected in any of the column circuits, which one of the redundancy switchover and the fallback operation is to be executed by the control section, on the basis of the setting information.
(6) The solid-state imaging element according to (5), in which, in a case where the fallback operation is to be executed, the fallback/redundancy determination section requests change of a cycle of a vertical synchronization signal from a host device.
(7)The solid-state imaging element according to (5) or (6), further including:
   a pixel array section in which a plurality of pixels is arranged in a two-dimensional lattice-like pattern; and
   a pixel interpolating section that executes, in a case where one or more of the plurality of pixels fail, an interpolation of a pixel signal of the failed pixel on the basis of pixel signals around the failed pixel, in which
   the failure detecting section further detects presence or absence of a failure of each of the plurality of pixels.
(8) The solid-state imaging element according to (7), further including a statistical processing section that acquires a variable range of a region of interest in the pixel array section, through statistical processing.
(9) The solid-state imaging element according to (8), further including a failure counting section that counts number of failures detected from the variable range within a predetermined period and outputs a count value, in which
   the redundancy/fallback determination section executes the redundancy switchover or the fallback operation in a case where the count value is greater than a predetermined threshold value.
(10) A solid-state imaging element including:
   a predetermined number of column circuits that read pixel signals;
   a failure detecting section that detects presence or absence of a failure in each of the column circuits; and
   a control section that executes, in a case where a failure is detected in any of the column circuits, a fallback operation for reducing a read speed for the predetermined number of column circuits.
(11) An imaging system including:
   a host device;
   a predetermined number of column circuits that read pixel signals;
   a redundant column circuit;
   a failure detecting section that detects presence or absence of a failure in each of the column circuits, and that notifies the host device of a detection result; and
   a control section that executes, in a case where a failure is detected in any of the column circuits, redundancy switchover for switching points where at least a part of the predetermined number of column circuits and the redundant column circuit are respectively connected.
(12) A method for controlling a solid-state imaging element, the method including:
   a step in which a predetermined number of column circuits read pixel signals;
   a failure detection step in which a failure detecting section detects presence or absence of a failure in each of the column circuits; and
   a control step in which a control section executes, in a case where a failure is detected in any of the column circuits, redundancy switchover for switching points where at least a part of the predetermined number of column circuits and a redundant column circuit are respectively connected.

### REFERENCE SIGNS LIST

- 100: Imaging system
- 110: Host device
- 200: Edge device
- 210: Vertical drive circuit
- 220: Fallback/redundancy control section
- 221: Redundancy control section
- 222: Fallback control section
- 231, 232: DAC
- 240, 250: Column signal processing section
- 241, 251: Selector
- 242, 252: ADC
- 243, 253: Comparator
- 244, 254: Counter
- 245, 255: Latch circuit
- 246, 256: Dummy source follower
- 247, 248: Dummy transistor
- 260, 270: Horizontal transfer section
- 280: Pixel array section
- 281: Column circuit
- 282: Redundant column circuit
- 300: Image processing section
- 310: Input/output control section
- 320: Register
- 330: ROI coordinate recording section
- 331: Statistical processing section
- 340: Image transfer processing section
- 350: Failure detecting section
- 360: Fallback/redundancy determination section
- 361: Redundancy determination section
- 362: Fallback determination section
- 370: Failure counting section
- 400, 400-1, 400-2: Shared block
- 411 to 414: Photoelectric conversion element
- 421 to 424: Transfer transistor
- 441: Reset transistor
- 442: Floating diffusion layer
- 443: Amplification transistor
- 444: Selection transistor
- 445, 446: Connection transistor
- 12031: Imaging section

## Claims

1. A solid-state imaging element comprising:
a predetermined number of column circuits that read pixel signals;
a redundant column circuit;
a failure detecting section that detects presence or absence of a failure in each of the column circuits; and
a control section that executes, in a case where a failure is detected in any of the column circuits, redundancy switchover for switching points where at least a part of the predetermined number of column circuits and the redundant column circuit are respectively connected.

2. The solid-state imaging element according to claim 1, further comprising a pixel array section including N floating diffusion layers aligned along a predetermined direction, wherein
the predetermined number of column circuits is N,
prior to any detection of a failure, first to Nth floating diffusion layers are connected to first to Nth column circuits, and
in a case where an nth column circuit fails, with n being an integer between 1 and N, the control section switches, in the redundancy switchover, points where nth to Nth floating diffusion layers are connected to (n+1)th to Nth column circuits and the redundant column circuit.

3. The solid-state imaging element according to claim 1, wherein, in a case where a failure is detected in any of the column circuits, the control section executes one of the redundancy switchover or a fallback operation for reducing a read speed for the predetermined number of column circuits.

4. The solid-state imaging element according to claim 3, wherein
each of the predetermined number of column circuits includes:
first and second analog-to-digital converters;
first and second vertical signal lines;
a first selector that connects any one of the first and second vertical signal lines to any one of the first and second analog-to-digital converters; and
a second selector that connects any one of the first and second vertical signal lines to one of the first and second analog-to-digital converters, and
in the fallback operation, in a case where one of the first and second analog-to-digital converters or one of the first and second vertical signal lines fails, the control section controls one of the first and second selectors to cause the first and second vertical signal lines to connect alternately to another one of the first and second analog-to-digital converters, in synchronization with a horizontal synchronization signal.

5. The solid-state imaging element according to claim 4, further comprising:
a retaining section that retains setting information indicating priority of each of the redundancy switchover and the fallback operation; and
a fallback/redundancy determination section that determines, in a case where a failure is detected in any of the column circuits, which one of the redundancy switchover and the fallback operation is to be executed by the control section, on a basis of the setting information.

6. The solid-state imaging element according to claim 5, wherein, in a case where the fallback operation is to be executed, the fallback/redundancy determination section requests change of a cycle of a vertical synchronization signal from a host device.

7. The solid-state imaging element according to claim 5, further comprising:
a pixel array section in which a plurality of pixels is arranged in a two-dimensional lattice-like pattern; and
a pixel interpolating section that executes, in a case where one or more of the plurality of pixels fail, an interpolation of a pixel signal of the failed pixel on a basis of pixel signals around the failed pixel, wherein
the failure detecting section further detects presence or absence of a failure of each of the plurality of pixels.

8. The solid-state imaging element according to claim 7, further comprising a statistical processing section that acquires a variable range of a region of interest in the pixel array section, through statistical processing.

9. The solid-state imaging element according to claim 8, further comprising a failure counting section that counts number of failures detected from the variable range within a predetermined period and outputs a count value, wherein
the redundancy/fallback determination section executes the redundancy switchover or the fallback operation in a case where the count value is greater than a predetermined threshold value.

10. A solid-state imaging element comprising:
a predetermined number of column circuits that read pixel signals;
a failure detecting section that detects presence or absence of a failure in each of the column circuits; and
a control section that executes, in a case where a failure is detected in any of the column circuits, a fallback operation for reducing a read speed for the predetermined number of column circuits.

11. An imaging system comprising:
a host device;
a predetermined number of column circuits that read pixel signals;
a redundant column circuit;
a failure detecting section that detects presence or absence of a failure in each of the column circuits, and that notifies the host device of a detection result; and
a control section that executes, in a case where a failure is detected in any of the column circuits, redundancy switchover for switching points where at least a part of the predetermined number of column circuits and the redundant column circuit are respectively connected.

12. A method for controlling a solid-state imaging element, the method comprising: a step in which a predetermined number of column circuits read pixel signals; a failure detection step in which a failure detecting section detects presence or absence of a failure in each of the column circuits; and a control step in which a control section executes, in a case where a failure is detected in any of the column circuits, redundancy switchover for switching points where at least a part of the predetermined number of column circuits and a redundant column circuit are respectively connected.
